# EUROPEAN PATENT SPECIFICATION

(11) **EP 4 511 831 B1**
(45) Date of publication and mention of the grant of the patent: **11.03.2026**
(21) Application number: 23722777.2
(22) Date of filing: 18.04.2023
(51) Int. Cl.: G10L 15/22, G06F 40/232, G10L 15/26

(54) **MACHINE LEARNING BASED CONTEXT AWARE CORRECTION FOR USER INPUT RECOGNITION**
AUF MASCHINELLEM LERNEN BASIERENDE KONTEXTBEWUSSTE KORREKTUR FÜR BENUTZEREINGABEERKENNUNG
CORRECTION SENSIBLE AU CONTEXTE BASÉE SUR L'APPRENTISSAGE MACHINE POUR UNE RECONNAISSANCE D'ENTRÉE D'UTILISATEUR

(30) Priority: 21.04.2022 US 202263363319 P
(43) Date of publication of application: 26.02.2025
(73) Proprietor: GOOGLE LLC, Mountain View CA 94043 (US)
(72) Inventor: AGGARWAL, Vikram, Mountain View, CA 94043 (US); SODHI, Sukhdeep, Singh, Mountain View, CA 94043 (US); JASH, Ambarish, Mountain View, CA 94043 (US); GUPTA, Abhirut, Mountain View, CA 94043 (US); RAGHUVEER, Aravindan, Mountain View, CA 94043 (US); GUPTA, Pramod, Mountain View, CA 94043 (US); BAPAT, Akshay, Rajendra, Mountain View, CA 94043 (US)
(74) Representative: Derry, Paul Stefan
(86) International application number: PCT/US2023/018923
(87) International publication number: WO 2023/205132

(56) References cited:
- CN-A- 113 012 705
- US-A1- 2016 163 310
- US-A1- 2019 213 996
- US-A1- 2020 027 445
- US-A1- 2021 142 789

## Description

### CROSS-REFERENCE TO RELATED APPLICATIONS/

### INCORPORATION BY REFERENCE

This application claims priority to U.S. Provisional Patent Application No. 63/363,319, filed on April 21, 2022.

### BACKGROUND

Many modern computing devices, including mobile phones, personal computers, and tablets, include on-device input recognition capabilities. The devices can capture and recognize textual or speech inputs and provide the recognized text or speech to one or more downstream applications.

Mobile phone applications are limited in the amount of available computational resources. Accordingly, enabling user access to efficient input recognition tools, while utilizing low computational resources, is a significant technological improvement.

US2020/027445 discloses correcting transcriptions created through automatic speech recognition. A transcription of speech created using an automatic speech recognition system can be received. One or more domain-specific contexts associated with the speech can be identified and a text span that includes a mistranscribed entry can be recognized from the speech based on the one or more domain-specific contexts. Additionally, features can be extracted from the mistranscribed entry and the extracted features can be matched against an index of domain-specific entries to identify a correct entry of the mistranscribed entry. Subsequently, the transcription can be corrected by replacing with the mistranscribed entry with the correct entry.

US2019213996A1 discloses that a mistranscription generated by a speech recognition system is identified. A set of known utterance members is provided for use by a speech recognition system. Each utterance member consists of a respective plural number of words. A received utterance is matched to a first utterance member within the set of known utterance members. The first utterance member is a closest matching utterance member and has a first plural number of words. The matching operation matches fewer than the first plural number of words in the received utterance and the received utterance varies in a first particular manner as compared to a first word in a first slot in the first utterance member. The received utterance is sent to a mistranscription analyzer component which increments evidence that the received utterance is evidence of a mistranscription. Once the incremented evidence for the mistranscription exceeds a threshold, future received utterances containing the mistranscription are treated as though the first word was recognized.

US2021142789A1 discloses detecting and resolving mis-transcriptions in a transcript generated by an automatic speech recognition system when transcribing spoken words. The system and method receive a machine language generated transcript of a speech signal by at least one of a first machine learning system and a second machine learning system, and analyze the machine language generated transcript to find a region of low confidence indicative of a mis-transcription and predict an improvement to the region of low confidence indicative of the mis-transcription. The system and method select a replacement word for the mis-transcription based on the predicted improvement to the region of low confidence and replace the mis-transcription by the replacement word to generate a corrected transcript.

### SUMMARY

Accuracy of on-device recognition of user input can be challenging when the input includes terms that are not recognized as common terms. For example, when the input is in the form of speech, one or more phrases may be pronounced in a way that significantly depends on the speaker. In some instances, phonetic variations of phrases, or misspellings of terms, grammatical preferences, and so forth, can be personal to the user (e.g., names, locations, proper nouns, input by the user). In other instances, use of certain terms can present privacy challenges, especially when user-specific models are generated. For example, medical terms such as "hernia" or "hemangioma" can be difficult to recognize in speech using aggregate speech recognition models, and such medical terms can also be deemed to be highly personalized content.

Some existing techniques to improve input recognition involve user feedback. For example, the user can be prompted to provide these terms as search terms, and personalization can be performed based on such user feedback. However, such personalization does not occur in real-time when speech is being recognized. Other techniques may rely on user generated rewrites of words or phrases to recognize correctly transcribed terms. However, such user generated rewrites may not be adequate for terms that occur infrequently, and/or terms that are specific to a particular domain. Also, for example, users may speak terms with different accents, dialects, and so forth, and it may be difficult to differentiate between different phonetic expressions of a particular term. Accordingly, there is a need for an on-device input recognition tool that includes a context aware correction module for automatic input recognition at the time input recognition is performed at the device.

The matter for protection is defined by the claims.

The foregoing summary is illustrative only and is not intended to be in any way limiting. Aspects, embodiments, and features will become apparent by reference to the figures and the following detailed description and the accompanying drawings.

### BRIEF DESCRIPTION OF THE FIGURES

FIG. 1 illustrates an overall system for a context aware correction model for input recognition, in accordance with example embodiments.
FIG. 2 illustrates an example input recognition system, in accordance with example embodiments.
FIG. 3 illustrates an example context aware correction for input recognition, in accordance with example embodiments.
FIG. 4 illustrates an example training phase of a neural network for a context aware correction model for input recognition, in accordance with example embodiments.
FIG. 5 an example neural network for a context aware correction model for input recognition, in accordance with example embodiments.
FIG. 6 is a diagram illustrating training and inference phases of a machine learning model, in accordance with example embodiments.
FIG. 7 depicts a distributed computing architecture, in accordance with example embodiments.
FIG. 8 is a block diagram of a computing device, in accordance with example embodiments.
FIG. 9 is a flowchart of a method, in accordance with example embodiments.
FIG. 10 is a flowchart of a correction method, in accordance with example embodiments.

### DETAILED DESCRIPTION

### Overview

Examples described herein relate to machine learning based context aware correction for input recognition (e.g., automatic speech recognition (ASR)). In particular, a trained machine learning model (e.g., a convolutional neural network) can recognize a potentially mistranscribed term in speech as transcribed by the ASR system, and substitute the potentially mistranscribed term with another term in the speech as transcribed. For example, pairs of non-common terms and associated mistranscribed terms may be generated in advance to allow for improvement of transcriptions in substantial real-time. In some embodiments, the non-common terms may be terms that were observed during previous interactions of the user with the device to capture relevant terms without overburdening the system. The non-common terms are terms that are likely to be mistranscribed during transcription. For example, non-common terms may be terms that are associated with a high likelihood of being mistranscribed. In some embodiments, the non-common terms may be generated by a suitably trained machine learning algorithm. Also, for example, non-common terms may be corrected versions of mistranscribed terms (e.g., previously corrected by a user, and/or selected by a user). The mistranscribed terms are possibly incorrect or likely mistranscribed versions of the non-common terms. In some embodiments, the mistranscribed terms may be generated using machine learning models. For example, one or more machine learning algorithms may be used for the identification and correction of incorrect versions of non-common terms. In some embodiments, the mistranscribed terms are generated prior to being generated by an input recognition system running on the device. Generally, mistranscribed terms are possible errors that may occur during transcription.

The generated mistranscribed terms remain on the device, thereby maintaining privacy of user data. Also, for example, data generation and model training can be performed entirely on the device of the user. This has significant compute and privacy benefits for a large service provider, where many millions of users could be submitting billions of terms every hour.

The generated mistranscribed terms are an expansion of the capabilities of existing input recognition systems. The modified input recognition system uses terms familiar to the user, and thus the total number of mistranscribed terms that the device has to consider are limited to a small number. This reduces consumption of battery power and computational power, especially on resource constrained mobile devices. This technique offers improved latency performance and significantly improved privacy properties.

The generated mistranscribed terms can be applied to an upstream input recognition system. This ensures that input recognition can be performed on a server or on-device, according to the best resource available. For example, the available network resources can allow the device to communicate with a server. However, in situations where a network is not available, and/or the network bandwidth is constrained, the on-device modified input recognition system can be used. Also, for example, the input recognition can be performed at a remote server, whereas the correction module can be applied by an on-device system.

Applying the correction module at the device has several advantages. For example, the generated mistranscribed terms do not leave the device (e.g., is not shared with a server, with other devices, and so forth), and are used for on-device processing. This has several advantages. For example, by restricting content to the device, any user information that may be used for input recognition is maintained with appropriate privacy and/or security controls. For example, the content may be encrypted, stored in a dedicated memory location on the device, and so forth. Such features also enhance the capabilities of the input recognition system, as the input recognition can be suitably personalized to a particular user, user preferences, and so forth, based on user control of an extent of the personalization. Also, for example, the user can retain control over what information is collected about the user, how that information is used, and what information is provided to the user. On-device processing is advantageous as it enables faster processing, less power consumption, lower latency, and less data transmission over a network. Also, for example, in situations where a server may be unavailable, a network may be unavailable, a secured network may be unavailable, and/or network bandwidth may be limited, on-device processing can continue to perform automatic input recognition.

Further to the descriptions above, a user may be provided with controls allowing the user to make an election as to both if and when systems, programs, or features described herein may enable collection of user information (e.g., information about a user's social network, social contacts, or activities, a user's preferences, or a user's current location, and so forth), and if the user is sent content or communications from a server. In addition, certain data may be treated in one or more ways before it is stored or used, so that personal data is removed, secured, encrypted, and so forth. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user. In addition to user controls, in embodiments where user information is used for input recognition, such user information is restricted to the user's device, and is not shared with a server, and/or with other devices. Also, for example, the user information may be deleted after use. For example, in the instance where the user consents to the use of such data, the data may be used to determine the mistranscribed terms, which may then be securely stored on the device, and not shared with other devices, servers, and so forth.

In some examples, a trained machine learning model can work on a variety of computing devices, including but not limited to, mobile computing devices (*e.g.,* smart phones, tablet computers, cell phones, laptop computers), stationary computing devices (*e.g.,* desktop computers), and server computing devices.

A machine learning model, such as a convolutional neural network, can be trained using training data (e.g., speech data) to perform one or more aspects as described herein. In some examples, the neural network can be arranged as an encoder/decoder neural network.

A trained machine learning model can process the input data to predict an output data comprising one or more words and/or phrases that are associated with the input data. In one example, (a copy of) the trained neural network can reside on a mobile computing device. In some embodiments, the mobile computing device can include a microphone that can capture input voice data. In response, the trained neural network can generate a predicted output word that is associated with the input voice data.

In some embodiments, a first trained machine learning model can perform input recognition to generate a transcription of an input, and a second trained machine learning model can perform auto-correction of the transcription. Although the auto-correction of the transcription is performed by an on-device system, the input recognition can be performed by a remote server. In such embodiments, the on-device system can receive the input and send the input to the remote server. The remote server can apply the first trained machine learning model to generate the transcription of the input. Subsequently, the on-device system can receive the transcription from the remote server, and perform the auto-correction of the transcription.

As such, the herein-described techniques can improve input recognition by applying a context aware correction module, thereby enhancing an actual and/or perceived quality of input recognition. Enhancing the actual and/or perceived quality of input recognition can provide benefits to downstream applications that depend on an output of an input recognition system (e.g., voice enabled applications). These techniques are flexible, and so can apply a wide variety of user input such as human voices, including various languages, dialects, and accents.

### Localized Speech Correction

An on-device correction module is described, where the correction module is context aware. For example, a correction module may be trained using web-scale data synthetically generated via a noisy channel simulator. The model can be subsequently fine-tuned for various applications. Such a technique can enable a client to fine-tune the same model, and this can enable transfer learning, while restricting information leak between clients.

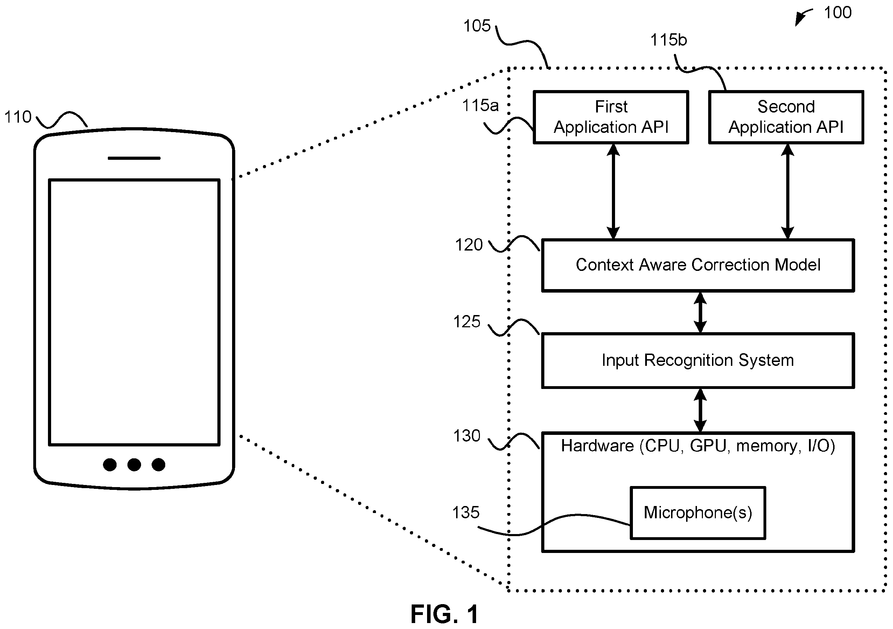

FIG. 1 illustrates an overall system 100 for a context aware correction model for input recognition, in accordance with example embodiments. Device 110 receives, by an on-device system 105 running on device 110, an input from a user during an interaction with device 110. Device 110 may include computing devices such as a laptop, a desktop computer, a smart television, an electronic reading device, a streaming content device, a gaming console, a tablet device, or other related computing devices that are configured to execute software instructions and application programs. The speech input uttered by the user can be a voice command to an application program. For example, the application program may be a media playback application for playing music, and the voice command can be an instruction to play a certain song. As another example, the voice command can be a search query to search a music library of the media playback application.

In another example, the application program may be a text editor, and the voice command can be a dictation to enter text. Also, for example, the voice command can be a command to a computing device to perform one or more operations. For example, the computing device may be a mobile device, and the voice command can be an instruction to open an application program (e.g., maps, contacts, a browser, etc.), to find directions to a location, to initiate a voice or video call with a user from the list of contacts, to send instructions to a digital assistant device (e.g., a home assistant device), and so forth. As another example, the computing device may be associated with a controller for an autonomous vehicle, and the voice command can be an instruction related to an operation of the vehicle.

In some embodiments, on-device system 105 can be configured to run on an operating system of device 110. On-device system 105 can include an interface (e.g., by an application programming interface (API)) to communicate with one or more application programs on device 110. For example, on-device system 105 can communicate with a first application program by first application API 115a, and can communicate with a second application program by second application API 115b.

The term "application program" as used herein, can be any computer program that is configured to interact with a user of device 110. Example application programs can include a search application, an email application, a text message application, an instant messaging application, a web browsing application, a mapping application, a media playback application, a weather application, a phone application, a video communication application, a camera application, an application associated with a service provider (e.g., financial, insurance, etc.), an application associated with a digital assistant (e.g., a home assistant), or any other application program configured to receive user input such as speech audio input, digital text input, alpha-numeric input, character input, and/or digital image input.

The term "interaction" can broadly refer to any activity, active and/or passive, performed by a user with device 110, or an application program on device 110. For example, an interaction can involve viewing content, listening to content, inputting, editing, and/or modifying content (e.g., via a keyboard, a mouse, a tap, and so forth), a sensory interaction (e.g., haptic, visual, auditory, tactile, and so forth), a scrolling interaction, a voice interaction, a user selection, and so forth. In some embodiments, the interaction may not be a direct interaction of the user with the content. For example, the user may listen to a particular genre of songs, or watch a particular genre of movies. The computing device may determine user interaction with a particular song from a particular genre as an interaction with songs of the same genre in the library. Likewise, the computing device may determine user interaction with a particular movie from a particular genre as an interaction with movies of the same genre in the library. As another example, a user interaction with an electronic mail can be determined to be an interaction with an entire chain of electronic mails, and/or a plurality of mail exchanges with a particular sender of the electronic mail.

In some embodiments, user interaction may be an interaction with a digital assistant (e.g., an intelligent digital assistant). For example, the user may send voice commands, such as, for example, "turn on the lights in the den," "play music by Jenna K.," "play the second episode of the series I watched yesterday," "set the thermometer settings to home," and so forth. In some embodiments, user interaction may be an interaction with a search assistant. For example, the user may input text into a search field of a web browser. As another example, the user may use voice instructions to enter a search term, such as, for example, "search for the nearest Italian restaurant that was reviewed in the local daily last weekend."

In some embodiments, user interaction may be an interaction with a map application. For example, the user may input a street address as a text input in an address entry field for a mapping application. Also, for example, the user may use voice instructions to input a destination for a navigation application. For example, the user may say, "take me home," or "find me a route with no tolls," "is there public transport to the Globe Theater," and so forth.

On-device system 105 can interface with one or more hardware components 130 (e.g., a central processing unit (CPU), a graphics processing unit (GPU), memory, input and/or output devices of device 110). For example, on-device system 105 can interface with one or more input method editors, such as a speech editor to edit speech input from microphone(s) 135. In some embodiments, the speech input by the user can be captured by microphone(s) 135. Microphone(s) 135 may be a part of device 110, or may be an audio input device (e.g., a wired or wireless microphone) separate from device 110, and communicatively linked to device 110. For example, a user can activate microphone(s) 135 to enable voice dictation, or to send voice instructions to perform an action. Also, for example, on-device system 105 can interface with an input method editor for text input. The text input may be by a digital or physical keyboard. For example, a touch screen of device 110 can display a digital keyboard. In some embodiments, different digital keyboards corresponding to different languages may be displayed. Also, for example, different digital keyboards corresponding to different layouts, designs, and so forth, may be displayed.

On-device system 105 can interface with input recognition system 125. In some embodiments, on-device system 105 can receive, from input recognition system 125, a transcription of the user input. Input recognition system 125 can be configured to recognize user input. For example, input recognition system 125 can be a speech recognition system that is configured to recognize speech. Also, for example, input recognition system 125 can be a text recognition system that is configured to recognize text. For example, input recognition system 125 can include text recognition logic, programmed instructions, or algorithms to manage identification, extraction, and analysis of characteristics of a text input. For example, input recognition system 125 can execute comparator logic to compare spatial characteristics of the text input to various model parameters in a spatial model, and/or language model. For example, the spatial model may be employed in text prediction by associating spatial coordinates of letters or spatial relationships between letters that are input by typing, swiping, or gesturing.

In some embodiments, input recognition system 125 can reside on device 110. In some embodiments, input recognition system 125 can be an interface (e.g., an application programming interface) at device 110 for an input recognition system residing at a remote server. For example, a first trained machine learning model can perform input recognition to generate a transcription of the input, and a second trained machine learning model can perform auto-correction of the transcription. Although the auto-correction of the transcription is performed by an on-device system (e.g., context aware correction module 120), the input recognition can be performed by a remote server that interfaces with device 110 by an API (e.g., input recognition system 125). In such embodiments, the on-device system can receive the user input and send the user input to the remote server. The remote server can apply the first trained machine learning model to generate the transcription of the input. Subsequently, the on-device system can receive the transcription from the remote server, and perform the auto-correction of the transcription.

Some embodiments involve receiving, from an input recognition model, a transcription of the input. For example, input recognition system 125 such as, for example, a speech recognition system, can transcribe the speech input received by microphone(s) 135 and provide the transcription. The term "speech recognition" as used herein, can generally refer to any process that recognizes audio input and converts the audio input to a textual format. For example, microphone(s) 135 can receive the speech input in the form of human speech, and input recognition system 125 can transcribe the human speech into text. In some embodiments, input recognition system 125 can include one or more machine learning models that are trained to recognize speech.

Recognizing input (e.g., speech, text, etc.) can be a challenging task. For example, there may be challenges due to the inherent complexities of various languages, and/or dialects therein. In some embodiments, there may be variations in the way speech is uttered, and/or text is input, by different individuals. For example, input recognition can be especially challenging when a particular term is not recognized as a common term in a dictionary associated with a language. Although input recognition systems can be trained to recognize different languages, accents, dialects, and so forth, such input recognition systems may still be unable to recognize a word, or a phrase uttered and/or input by a user. Also, for example, such input recognition systems may be located at a server remote from the device, and various data processing restrictions may limit an appropriate personalization of such systems, and/or network limitations may limit access to such remote servers. Accordingly, on-device processing may be preferred both for privacy and/or security controls, as well as to enable faster processing, less power consumption, lower latency, less data transmission over a network, and so forth.

On-device system 105 is configured to identify a candidate term for substitution in the transcription of the input. For example, on-device system 105 can perform one or more operations, including scanning the transcription, filtering out common terms, performing contextual analysis, and so forth. On-device system 105 may then determine that the transcription is accurate (within appropriate thresholds of allowable accuracy), and no corrections are to be made. In some embodiments, on-device system 105 may identify one or more candidate terms that are likely to have been mistranscribed. For example, on-device system 105 may identify one or more non-common terms that are likely to be mistranscribed, one or more terms that have previously been mistranscribed, one or more terms that have previously been corrected by the user in past interactions with the computing device, and so forth.

In some embodiments, accuracy of transcription of user input (e.g., speech to text conversion, textual input via a keyboard, and so forth) can be enhanced based on a context of the input (e.g., an email application, a mapping application, a home assistant, a search query, and so forth). For example, phonetically similar words may be transcribed to two different transcribed versions based on the context of a speech. Accordingly, on-device system 105 can include context aware correction model 120 that can correct the transcription of the input by input recognition system 125. For example, context aware correction model 120 can interface with one or more application programs on device 110 (e.g., interface with a first application program by first application API 115a, and interface with a second application program by second application API 115b), understand an underlying context for the user input, and correct a transcribed term generated by input recognition system 125.

In some embodiments, on-device system 105 accesses, based on the candidate term, a plurality of pairs of mistranscribed terms and non-common terms, wherein the non-common terms are likely to be mistranscribed, and wherein the mistranscribed terms for the non-common terms in the plurality of pairs were generated by a machine learning model. In some embodiments, the non-common terms in the plurality of pairs may have been observed by the on-device system in one or more past interactions of the user with the computing device. In some embodiments, the non-common terms in the plurality of pairs may have been synthetically generated (e.g., based on aggregate statistics of user inputs, a trained machine learning model, and so forth). Also, for example, non-common terms may be corrected versions of mistranscribed terms (e.g., previously corrected by a user, and/or selected by a user during an automatic correction process). The mistranscribed terms are generally possible mistranscribed versions of the non-common terms. In some embodiments, the mistranscribed terms may be generated using machine learning models. For example, one or more machine learning algorithms may be used for the identification and correction of incorrect alternatives. In some embodiments, the mistranscribed terms are generated prior to being generated by an input recognition system running on the device. Generally, mistranscribed terms are possible errors that may occur during transcription. As described herein, pairs of non-common terms and associated mistranscribed terms may be generated in advance to allow for immediate improvement of transcriptions.

Based on the plurality of pairs of mistranscribed terms and non-common terms, on-device system 105 substitutes the candidate term with a non-common term in the transcription of the input. For example, on-device system 105 may compare the candidate term with one or more mistranscribed terms, and then select (e.g., based on a ranking of the pairs) a non-common term from a pair of mistranscribed terms and non-common terms. On-device system 105 may then substitute the candidate term with the selected non-common term.

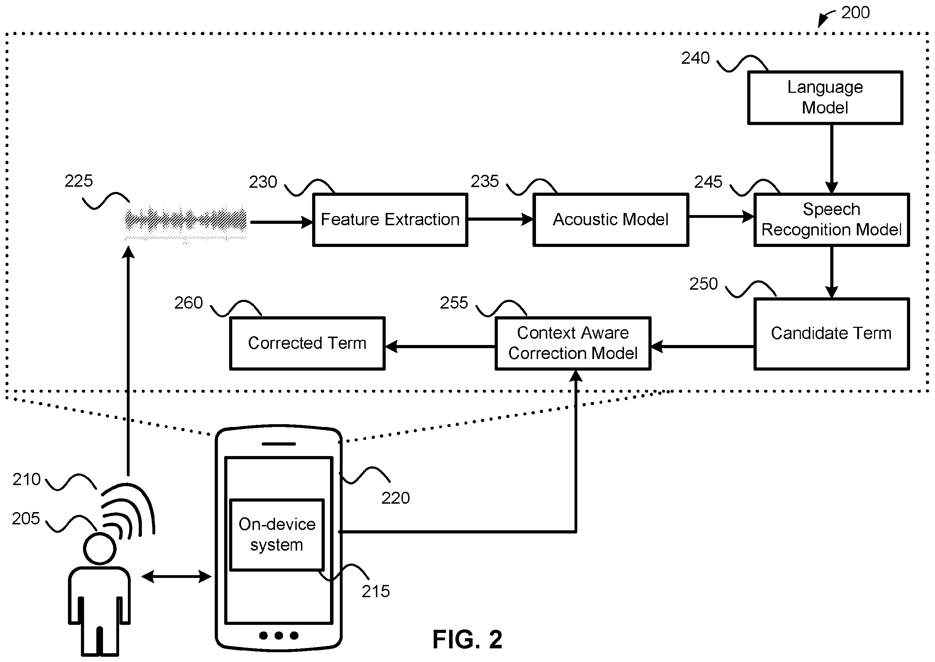

FIG. 2 illustrates an example input recognition system 200, in accordance with example embodiments. In some embodiments, speech input 210 uttered by a user 205 during an interaction with computing device 220 can be received by on-device system 215 running on computing device 220. Speech input 210 can be received in the form of audio signal 225. Feature extraction 230 can be configured to extract one or more features of audio signal 225. Acoustic model 235 can be configured to associate relationships between audio signal 225 and phonemes or other linguistic properties that form speech audio. For example, acoustic model 235 can be configured to identify and associate certain received utterances that exhibit acoustical characteristics that align with the acoustics associated with a spoken word or phrase.

Language model 240 can be configured to specify or identify certain word combinations or sequences. In some implementations, language model 240 can be configured to generate a word sequence probability factor which can be used to indicate a likely occurrence or existence of particular word sequences or word combinations. The identified word sequences may correspond primarily to sequences that are specific to a speech corpus rather than to a written corpus.

Speech recognition model 245 can be configured to receive input from acoustic model 235 and language model 240 to generate a transcript of speech input 210. For example, speech recognition model 245 can be configured to include speech recognition logic, programmed instructions, and/or algorithms that are executed by one or more processors to transcribe speech input 210. For example, speech recognition model 245 can execute program code to manage identification, extraction, and analysis of characteristics of the received audio signal 225. Further, speech recognition model 245 can execute comparator logic to compare characteristics of the received audio signal 225 to various model parameters stored in acoustic model 235 and language model 240. Results of the comparison can yield text transcription outputs that correspond substantially to speech input 210 provided by user 205 of computing device 220.

On-device system 215 accesses a plurality of pairs of mistranscribed terms and non-common terms. The non-common terms in the plurality of pairs may have been observed by on-device system 215 in one or more past interactions of user 205 with computing device 220. Generally, "non-common term" as used herein, may refer to any term that may be likely mistranscribed in a speech-to-text transcription process. In some embodiments, a non-common term can have different phonetic versions, and/or may be different transcribed versions of a speech term.

In some embodiments, user 205 may have viewed one or more documents related to medicine, and on-device system 215 may have extracted the non-common terms that appeared in the one or more documents related to medicine. As another example, user 205 may have listened to one or more songs related to a musical genre, and on-device system 215 may have extracted the non-common terms that appeared in the one or more songs, or a transcript thereof. Also, for example, user 205 may have interacted with a text editor to enter and/or modify text, and on-device system 215 may have extracted the non-common terms that appeared in the text.

The mistranscribed terms for the non-common terms in the plurality of pairs may have been generated by a machine learning model. Generally, "mistranscribed terms" can refer to different versions of a non-common term, where the different versions correspond to likely phonetic variations of the non-common term when uttered in speech, different textual versions, incorrectly spelled versions, and/or likely mistranscribed versions of a non-common term. The mistranscribed terms can be synthetically generated by a trained machine learning model. In some embodiments, the mistranscribed terms can be generated based on training data that uses speech uttered by various individuals.

On-device system 215 identifies a candidate term for substitution in the transcription of the input. For example, on-device system 215 may identify candidate term 250 that is likely to have been mistranscribed by speech recognition model 245. Accordingly, context aware correction model 255 is configured to determine whether candidate term 250 was mistranscribed, and if so, substitute candidate term 250 with a corrected term 260 in the transcription of the input. In some embodiments, context aware correction model 255 can be configured to communicate with computing device 220 to identify one or more non-common terms that were observed by on-device system 215 in one or more past interactions of user 205 with computing device 220.

Although various components of FIG. 2 are shown to be on computing device 220 for illustrative purposes only, various additional and/or alternative embodiments are contemplated. For example, although context aware correction model 255 resides on computing device 220, one or more of the other components may reside on computing device 220, at a remote server, or both. For example, speech recognition model 245 may reside on computing device 220. In some embodiments, speech recognition model 245 may reside at a remote server (e.g., a cloud server). Also, for example, certain portions of speech recognition model 245 may reside on computing device 220, whereas other portions can reside at the remote server.

For example, on-device system 215 can receive audio signal 225, and send audio signal 225 to a remote server for processing. Feature extraction 230 can be performed by the remote server. Also, for example, at the remote server, speech recognition model 245 can utilize acoustic model 235 and language model 240 to generate a transcription based on audio signal 225, and send the transcription to computing device 220. On-device system 215 may then identify candidate term 250, apply context aware correction model 255, and identify corrected term 260, to correct the transcription.

Although FIG. 2 describes an example embodiment for speech recognition, a similar approach can be applied for text recognition. For example, speech recognition model 245 can be a text recognition model that can utilize a keyboard model to recognize text input. In some embodiments, keyboard model can include a spatial model, a language model, a keyboard input mode editor, and so forth. For example, the keyboard model can be configured to receive touch and/or physical inputs corresponding to letters, numbers, symbols, emoticons, and/or characters. The mistranscribed terms can include variations on spellings, typical misspellings, common grammatical errors, variations on capitalizations, and so forth.

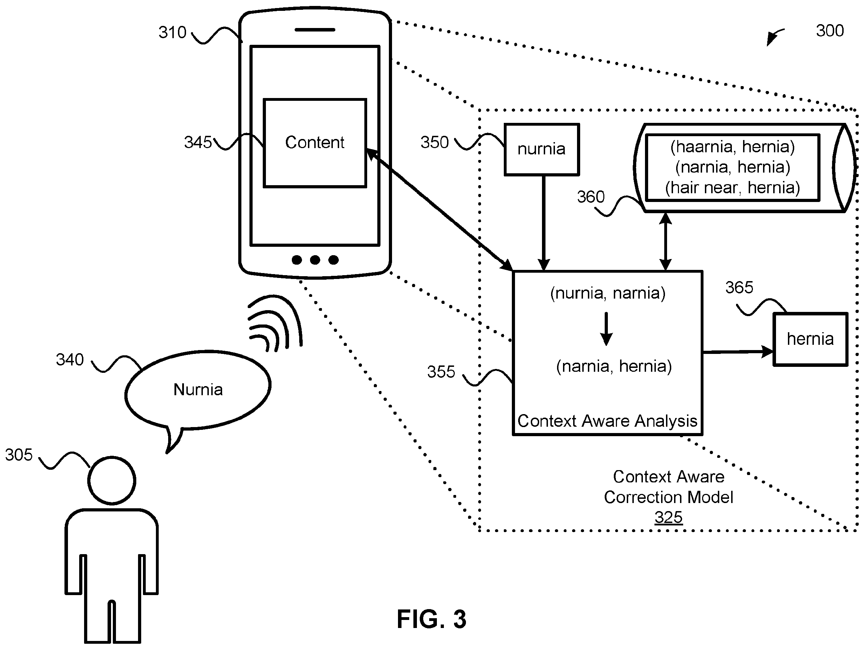

FIG. 3 illustrates an example context aware correction 300 for input recognition, in accordance with example embodiments. For example, user 305, while interacting with device 310, may utter speech 340, such as, "find me items related to nurnia" that includes a term "Nurnia". Although device 310 is shown as a mobile device, device 310 can be any device (e.g., a smart television, a digital content delivery device) configured to interact with user 305. In some embodiments, device 310 can receive the speech uttered by user 305, and a speech recognition system can transcribe the uttered speech to transcription of the speech input, such as, "find me items related to nurnia." In some embodiments, context aware correction model 325 may identify "nurnia" as a candidate term for substitution.

Context aware correction model 325 accesses a plurality of pairs of mistranscribed terms and non-common terms. For example, context aware correction model 325 can access on-device repository 360 of pairs of mistranscribed terms and non-common terms. As an illustrative example, the pairs of mistranscribed terms and non-common terms can be "(haarnia, hernia)," "(narnia, hernia)," and "(hair near, hernia)," where mistranscribed terms, "haarnia," "narnia," and "hair near" are paired with a non-common term "hernia." As illustrated in block 355, context aware correction model 325 can compare the transcribed term "nurnia" 350 to the mistranscribed terms, and determine that "nurnia" 350 matches the mistranscribed term "narnia." The term "match" as used herein can generally refer to a matching within a similarity threshold. In some embodiments, the term "match" can denote an exact match.

Context aware correction model 325 substitutes, based on the plurality of pairs of mistranscribed terms and non-common terms, the candidate term with a non-common term in the transcription of the input. For example, upon a determination that "nurnia" 350 matches the mistranscribed term "narnia," context aware correction model 325 can determine that the non-common term "hernia" that is paired with "narnia" as "(narnia, hernia)," is the correct transcription of the term "nurnia" 350. For example, a choice of a pair may be based on a confidence level for the pair. Accordingly, the non-common term "hernia" 365 is used to substitute the candidate term "nurnia " 350 in the transcribed text. For example, context aware correction model 325 corrects the transcription "find me items related to nurnia," generated by the speech recognition system, to "find me items related to hernia." Although this example illustrates substitution of a single term "nurnia," the same techniques can be applied to correct more than one candidate term in the transcription.

In some embodiments, the substituting of the candidate term involves comparing, by the on-device system, the candidate term with one or more mistranscribed terms from the plurality of pairs. Generally, a first comparison may be made between a candidate term and a plurality of mistranscribed terms based on a similarity determination or matching, and a second comparison may be made between pairs that include the mistranscribed terms based on respective confidence levels of the pairs. In some embodiments, a final choice of a pair may be based on a combination of the first and second comparisons.

In some embodiments, context aware correction model 325 can be configured to parse (e.g., observe) text that user 305 is viewing and/or editing. This can include text input for mails, short messages, query terms, and/or text that user 305 is viewing on device 310, such as, for example, web documents, inbound messages, text within applications, and so forth. This content does not leave the device (e.g., is not shared with a server, with other devices, and so forth), and is used for on-device processing. This has several advantages. For example, by restricting the content to the device, any user information that may be used for input recognition is maintained with appropriate privacy controls. Such features also enhance the capabilities of the input recognition system, as the input recognition can be suitably personalized to a particular user, user preferences, and so forth, based on user control of an extent of the personalization. Also, for example, the user can retain control over what information is collected about the user, how that information is used, and what information is provided to the user. On-device processing is advantageous as it enables faster processing, less power consumption, lower latency, and less data transmission over a network. Also, for example, in situations where a server may be unavailable, a network may be unavailable, a secured network may be unavailable, and/or network bandwidth may be limited, on-device processing can continue to perform automatic input recognition.

In some embodiments, identifying, by the on-device system, a candidate term for substitution in the transcription of the input can involve filtering common terms and retaining non-common terms. For example, context aware correction model 325 can be configured to filter common terms and retain non-common terms. The candidate term is likely to have been mistranscribed

For example, user 305 may have had a past interaction with device 310. For example, user 305 may have viewed content that related to medical information. Accordingly, context aware correction model 325 may have filtered the non-common term "hernia" appearing in the content previously viewed by user 305. In some embodiments, context aware correction model 325 may have generated one or more mistranscribed terms (e.g., by using a trained machine learning model). The mistranscribed terms may be determined to be textual versions of phonetically similar utterances of the non-common term "hernia." For example, context aware correction model 325 may have generated "haarnia," "narnia," and "hair near" as the mistranscribed terms corresponding to the non-common term "hernia." Accordingly, the pairs of mistranscribed terms and non-common terms, "(haarnia, hernia)," "(narnia, hernia)," and "(hair near, hernia)," may be stored in on-device repository 360.

In some embodiments, the past interaction of user 305 with device 310 may have included viewing media content. For example, user 305 may have viewed the movie titled "Narnia" or may have listened to a soundtrack from the movie "Narnia." As another example, user 305 may have read a review of the movie "Narnia." Accordingly, context aware correction model 325 may have filtered the non-common term "narnia" appearing in the content previously viewed by user 305. In some embodiments, context aware correction model 325 may have generated one or more mistranscribed terms (e.g., by using a trained machine learning model). The mistranscribed terms may be determined to be textual versions of phonetically similar utterances of the non-common term "narnia." For example, context aware correction model 325 may have generated "haarnia," "hernia," and "hair near" as the mistranscribed terms corresponding to the non-common term "narnia." Accordingly, the pairs of mistranscribed terms and non-common terms, "(haarnia, narnia)," "(hernia, narnia)," and "(hair near, narnia)," may be stored in on-device repository 360.

In some embodiments, each of the pairs of mistranscribed terms and non-common terms stored in on-device repository 360 may be associated with a respective confidence level indicative of a similarity of the particular mistranscribed term to a particular non-common term that is paired with the particular mistranscribed term. In some embodiments, the similarity can be a measure of phonetic similarity between a mistranscribed term and a non-common term.

The confidence level can be determined based on one or more factors. For example, the confidence level can be based on a source of the mistranscribed term. In some embodiments, a user's speech sample may be used to select or deselect a term as a mistranscribed term. Also, for example, one or more previous voice interactions of the user may be used to select or deselect a term as a mistranscribed term. In such embodiments, the confidence level associated with a pair comprising the selected mistranscribed term and an associated non-common term may be determined to be high.

In some embodiments, a frequency of utterance of a mistranscribed term by a user can be used to determine the confidence level. For example, when a mistranscribed term is uttered in the same manner with a high frequency, then the confidence level associated with a pair comprising the mistranscribed term and an associated non-common term may be determined to be high. For example, the user may pronounce the non-common term "Narnia" as "naaarnia," and the computing device may determine that a frequency of utterance of "Narnia" as "naaarnia" is higher than a frequency threshold. Accordingly, the confidence level associated with the pair (Naaarnia, Narnia) may be determined to be high. The frequency of utterance of a particular mistranscribed term can be based on several factors, including term frequency, term frequency-inverse document frequency (TF-IDF), and so forth.

In some embodiments, a frequency of observance of a non-common term by a user may determine a confidence level. For example, the computing device may determine a frequency of occurrence of a particular non-common term in content viewed by the user. The content viewed may be based on a single document, a single application program, or a plurality of application programs. Accordingly, based on a determination that the non-common term is observed by the user with a high frequency, the confidence level associated with a pair comprising the non-common term and an associated mistranscribed term may be determined to be high. Likewise, based on a determination that the non-common term is observed by the user with a low frequency, the confidence level associated with a pair comprising the non-common term and an associated mistranscribed term may be determined to be low. Generally, the frequency of a particular non-common term can be based on several factors, including term frequency, term frequency-inverse document frequency (TF-IDF), and so forth.

In some embodiments, the confidence level of the pair can be based on respective frequencies of occurrence of a mistranscribed term and a non-common term. For example, the confidence level may be based on a joint distribution of the individual frequencies. In some embodiments, the confidence level associated with a pair can vary based on an underlying application program and/or context of the non-common term. Also, for example, the confidence level associated with a pair can vary from one user to another. In some embodiments, the confidence level associated with a pair can be based on a language, an accent, a geographical location, and so forth.

For example, the pairs "(haarnia, hernia)," "(narnia, hernia)," and "(hair near, hernia)," may each be associated with a high level of confidence, indicating that each mistranscribed term "haarnia," "narnia," and "hair near" has a high degree of similarity to the non-common term "hernia." In some embodiments, similarity may be a phonetic similarity. As another example, a pair "(hyena, hernia)" may be associated with a medium level of confidence indicating that the mistranscribed term "hyena," has a medium degree of similarity to the non-common term "hernia." Also, for example, a pair "(herein, hernia)" may be associated with a low level of confidence indicating that the mistranscribed term "herein," has a low degree of similarity to the non-common term "hernia."

Similarly, the pairs "(haarnia, narnia)," "(hernia, narnia)," and "(hair near, narnia)," may each be associated with a high level of confidence, indicating that each mistranscribed term "haarnia," "hernia," and "hair near" has a high degree of similarity to the non-common term "narnia." As another example, a pair "(naina, narnia)" may be associated with a medium level of confidence indicating that the mistranscribed term "naina," has a medium degree of similarity to the non-common term "narnia." Also, for example, a pair "(aria, narnia)" may be associated with a low level of confidence indicating that the mistranscribed term "aria," has a low degree of similarity to the non-common term "narnia."

At run-time, user 305 may be interacting with device 310. In some embodiments, user 305 may be interacting with content 345. For example, user 305 may be a medical practitioner, and content 345 may be a live transcript of a voice interaction of user 305 with a patient. Accordingly, context aware correction model 325 may compare the transcribed term "nurnia" 350 to the mistranscribed terms and determine that "nurnia" 350 matches the mistranscribed term "narnia." However, based on content 345 that indicates a medical context, context aware correction model 325 may determine that "hernia" 365 is the correct transcription for transcribed term "nurnia" 350.

Some embodiments involve receiving, by the computing device, a second speech input uttered by the user during a second interaction with the computing device, wherein the second transcription of the input comprises the candidate term. For example, during a second interaction, user 305 may be interacting with a media playback application, and content 345 may be a browser displaying content provided by the media playback application. For example, user 305 may utter speech 340 to submit a voice search query to a media playback application. Such embodiments involve comparing the candidate term with one or more second mistranscribed terms, wherein the one or more second mistranscribed terms were observed by the on-device system in one or more past interactions of the user with a second application program of the computing device, and wherein the one or more second mistranscribed terms is different from the one or more mistranscribed terms. For example, context aware correction model 325 may compare the candidate term "nurnia" 350 to the mistranscribed terms and determine that "nurnia" 350 matches the mistranscribed term "narnia." However, based on content 345 that indicates a media playback context, context aware correction model 325 may determine that "narnia" is the correct transcription for transcribed term "nurnia" 350. Such embodiments also involve substituting, by the on-device system and based on the comparison, the candidate term with a second non-common term in the transcription of the input, wherein the second non-common term is paired with a second mistranscribed term of the one or more second mistranscribed terms. For example, "nurnia" 350 is substituted with a second non-common term, "Narnia."

Generally, one or more of a determination of the mistranscribed terms, the pairs comprising a mistranscribed term, a confidence level associated with each pair, a threshold for acceptance of a pair for substitution, can vary from one user to another, from one application program to another, and so forth. Also, for example, such determinations can be made by a trained machine learning model. Also, for example, such determinations can vary based on an application program, a user, a user's geographical location, and/or language used.

In some embodiments, user feedback may be incorporated in such determinations. In some embodiments, the one or more past interactions of the user with the computing device can involve a voice interaction. The non-common term in the plurality of pairs can be based on a user confirmation of a transcribed term based on the voice interaction. For example, an ASR may transcribe speech uttered by the user, and prompt a user to confirm that a transcribed term is correct.

In some embodiments, the one or more past interactions of the user with the computing device can involve an interaction with a text editor. For example, the user may be entering text in an electronic message, a short message, etc. and the computing device may prompt the user to confirm a corrected term, and/or prompt the user to select a correct term from one or more candidate terms provided to the user. Accordingly, the non-common term in the plurality of pairs can be based on a user confirmation and/or selection of a textual term in the text editor.

In some embodiments, the computing device can include a viewer interface. The one or more past interactions of the user with the computing device can involve textual content provided by the viewer interface. For example, the user may be browsing documents on the web, browsing a library associated with media content, and so forth. The non-common term in the plurality of pairs appears can appear the textual content, such as the documents that are being browsed, the music library, and so forth.

Input recognition models are generally trained based on user preferences. However, a quality of such training depends on a quality of available logs of past user preferences. Generally, maintaining such logs may require a lot of memory space, and also require continued training of the input recognition models, which can be resource intensive. However, a more efficient approach is to identify content that the user has viewed and filter out the non-common terms from the content, and store these in a local repository as potentially correct terms in the context of input recognition.

Variations in user accent can be a source of errors in automatic speech recognition. A geographical or regional accent of a user can sometimes be determined by a user's location information Also, for example, a user's ethnicity can be indicative of ethnic dialects (e.g., ethnolect), variations in spellings, and so forth. For example, ethnic dialects can indicate an influence from a first language of the user, among other things. Some variational factors may also be inferred from user information. In some embodiments, preferences provided by the user can be used. For example, a user can be prompted to utter a sentence, and the automatic speech recognition system can infer nuances and speech characteristics that are unique to the user.

Further to the descriptions above, a user may be provided with controls allowing the user to make an election as to both if and when systems, programs, or features described herein may enable collection of user information (e.g., information about a user's ethnicity, gender, social network, social contacts, or activities, a user's preferences, or a user's current location, and so forth), and if the user is sent content or communications from a server. In addition, certain data may be treated in one or more ways before it is stored or used, so that personal data is removed, secured, encrypted, and so forth. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user. In addition to user controls, in embodiments where user information is used for input recognition, such user information is restricted to the user's device, and is not shared with a server, and/or with other devices. Also, for example, the user information may be deleted after use. For example, in the instance where the user consents to the use of such data, the data may be used to determine pairs comprising mistranscribed terms and non-common terms, and the determined pairs are stored on the device. However the source of the content related to the mistranscribed terms and non-common terms may not be stored. As another example, user history related to past interactions with the device may not be stored.

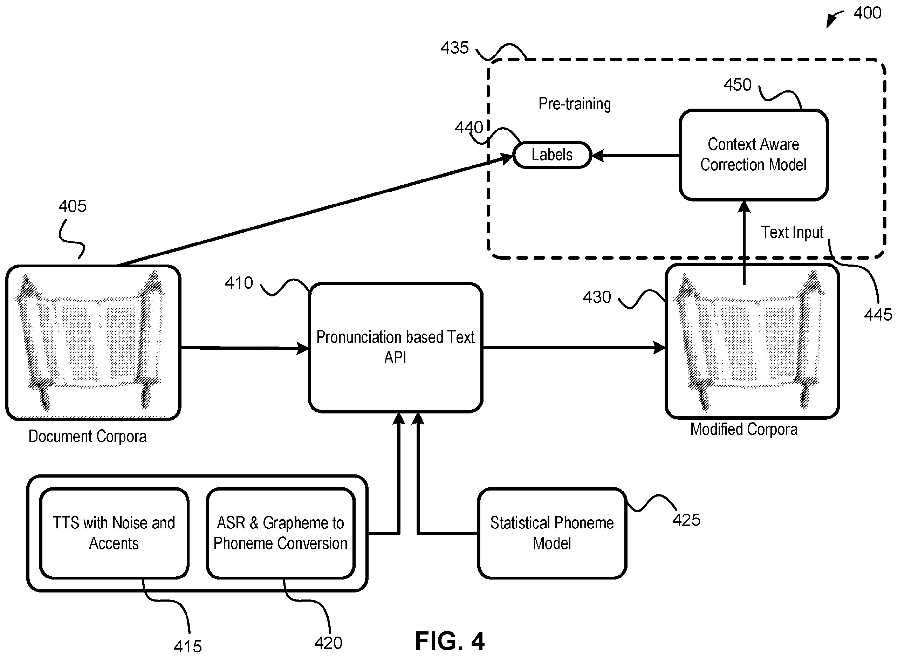

FIG. 4 illustrates an example training phase of a neural network 400 for a context aware correction model for input recognition, in accordance with example embodiments. In some embodiments, an initial training of neural network 400 can be performed without user logs. Also, for example, domain adaptation to a specific application program can be done by synthetically simulating errors (e.g., phonetic errors, contextual errors, and so forth). For example, domain adaptation to YouTube^{™} can be performed for creator, channel, artists, names of videos, and so forth, and the base model can be subsequently fine-tuned. For example, an initial version of context aware correction model 450 can be pre-trained remotely, and subsequent training can be performed at the computing device. As described herein, the input recognition systems described herein can be trained, and reside, at a remote server, whereas context aware correction model 450 can reside at the local computing device.

As another example, a music application program may be installed on the device, and the device can have access to a catalog of the music. Accordingly, variations in pronunciation of non-common terms (e.g., artist name, name of a song, portions of the lyrics, and so forth) may be generated as mistranscribed terms. When a user interacts with a voice interface for the music application program, the context aware correction model can correct outputs of the automatic speech recognition system to arrive at an accurate transcription of the uttered speech.

Also for example, an electronic mail system may be installed on the device, and the device may have access to contact information associated with the electronic mail system. The device may also be able to observe a user reading one or more messages, and non-common terms can be identified from the content of such messages. Variations in pronunciation of such non-common terms (e.g., name, salutation, keywords or phrases, and so forth) may be generated as mistranscribed terms. Subsequently, when a user interacts with a voice interface for the electronic mail system (e.g., to dictate a new message), the context aware correction model can correct outputs of the input recognition system to arrive at an accurate transcription of the uttered speech.

As another example, an application program may provide reviews for restaurants in a geographical area. Such an application may have access to restaurant names, addresses, menu items, names of chefs, names of cuisines, and so forth. The device may observe the user browsing menus for certain restaurants, and non-common terms can be identified from such browsing activity. Variations in pronunciation of such non-common terms may be generated as mistranscribed terms. Subsequently, a user may interact with a voice interface for the restaurant review application program, or another application (e.g., a mapping application, a reservation booking application, a short messaging application, an electronic mail application, a calendar application, and so forth), the context aware correction model can correct outputs of the input recognition system to arrive at an accurate transcription of the uttered speech. For example, the user may use the mapping application to generate directions to a particular restaurant, and the context aware correction model can enable an accurate recognition of the restaurant name, street name, and so forth. As another example, the user may use the short messaging application to send a text message to a contact to arrange a meeting at a particular restaurant offering a particular cuisine, and the context aware correction model can enable an accurate recognition of the restaurant name, the type of cuisine, and so forth.

In some embodiments, the training of the machine learning model further involves receiving a corpus of documents. In some embodiments, the training of the machine learning model can be performed at a server remote from the computing device where context aware correction model 450 resides. For example, the machine learning model can be pre-trained at a remote server. Document corpora 405 may be received by pronunciation based text API 410. Document corpora 405 can include a plurality of documents from the internet. Also, for example, documents corpora 405 can be application specific documents, such as, for example, content listings for media playback applications, and/or other application domain specific documentation. In some embodiments, documents within document corpora 405 can be associated with one or more application programs and/or concepts that the documents relate to. For example, document corpora 405 can include documents related to music, cinema, medicine, law, philosophy, history, literature, and so forth.

In some embodiments, the training of the machine learning model further involves synthetically simulating one or more errors based on the corpus of web documents. In some embodiments, the synthetically simulating of the one or more errors is based on a text-to-speech model that utilizes a noisy channel simulator. For example, pronunciation based text API 410 can use text-to-speech (TTS) model 415 with noise and accents. For example, TTS model 415 can include training data where text is converted to speech under different controlled noise conditions, to generate variations in speech induced by the noise conditions. For example, different forms of noise (e.g., random noise) can be artificially injected into speech to corrupt the speech and generate training data. Also, for example, different forms of background noise (e.g., traffic noise, airport noises, wind, water, rain, background music, background conversation, and so forth) can be artificially injected into speech to corrupt the speech and generate training data. Pronunciation based text API 410 can apply TTS model 415 to document corpora 405 to generate modified corpora 430 comprising textual errors in document corpora 405, where the errors are induced by the noise conditions.

Also, for example, TTS model 415 can include training data where text is converted to speech with different accents, dialects, and so forth. For example, a user can be prompted to read different textual documents, and user variations and speech characteristics can be captured. Pronunciation based text API 410 can apply TTS model 415 to document corpora 405 to generate modified corpora 430 comprising textual errors in document corpora 405, where the errors are induced by the different accents, dialects, and so forth.

In some embodiments, the synthetically simulating of the one or more errors is based on a grapheme to phoneme conversion model configured to generate a pronunciation for a word based on a textual version of the word. For example, pronunciation based text API 410 can receive output of an automatic speech recognition (ASR) system and grapheme to phoneme (G2P) conversion 420. For example, G2P conversion 420 can include training data where a grapheme sequence comprising letters is converted to a phoneme sequence representing the pronunciations of the grapheme sequence. Pronunciation based text API 410 can apply G2P conversion 420 to document corpora 405 to generate modified corpora 430 comprising textual errors in document corpora 405, where the errors are induced by the different phoneme sequences representing pronunciations of grapheme sequences.

In some embodiments, the synthetically simulating of the one or more phonetic errors is based on a statistical phoneme model. For example, pronunciation based text API 410 can receive input from statistical phoneme model 425. For example, statistical phoneme model 425 can utilize various phoneme characteristics, such as provided by the ASCII transcription of the International Phonetic Alphabet (IPA). Statistical phoneme model 425 can include training data based on different manners of articulation. For example, a source of an air flow can be considered, such as whether the air flow originates in the lungs, the tongue, the glottis, and so forth. In some embodiments, a target of the air flow can be considered, such as, for example, whether the air flow is directed to the mouth or the nose. A direction of air flow can be considered, for example, whether the air flow is toward the target or away from the target. Additional, and/or alternate phoneme characteristics can be modeled by statistical phoneme model 425. Accordingly, pronunciation based text API 410 can apply statistical phoneme model 425 to document corpora 405 to generate modified corpora 430 comprising textual errors in document corpora 405, where the errors are induced by the different phoneme characteristics.

Text input 445 generally refers to a transcription of the input. Data from modified corpora 430 along with text input 445 can be input into context aware correction model 450 for training purposes. In some embodiments, as part of a pre-training phase 435, labels 440 that capture labeled training data can be generated. For example, labels 440 can be generated based on document corpora 405 and an output of context aware correction model 450.

Some embodiments involve training the machine learning model to generate the mistranscribed terms for the non-common terms in the plurality of pairs. For example, context aware correction model 450 can be trained to generate mistranscribed terms for non-common terms. For example, non-common terms can be identified in document corpora 405, and context aware correction model 450 can be trained to generate mistranscribed terms for the identified non-common terms. At run-time, when a potentially mistranscribed term is identified in speech as transcribed, the potentially mistranscribed term can be compared to various mistranscribed terms to identify a correct non-common term that can be used to substitute the potentially mistranscribed term in the speech as transcribed.

Some embodiments involve tuning the trained machine learning model based on an application program of the computing device. For example, a non-common term can be associated with a first set of mistranscribed terms corresponding to a first application program, and with a second set of mistranscribed terms corresponding to a second application program. For example, a particular non-common term may be associated with a set of mistranscribed terms from a music library, whereas the same non-common term can be associated with a different set of mistranscribed terms based on a web browser application. In some embodiments, the tuning of the trained machine learning model involves generating the mistranscribed terms in the plurality of pairs based on one or more errors associated with the application program. For example, in some musical genres, a non-common term can be pronounced in a certain manner that may be a phonetically incorrect version of the non-common term. For example, the non-common term "tomato" may be pronounced as "tometo," "tamaato," and the trained machine learning model can recognize "tometo," "tamaato" as mistranscribed terms for "tomato."

In some embodiments, the various models 415, 420, and 425 can be trained on a server and packaged to a device. Also, for example, the various models 415, 420, and 425 can be trained on a server, and updates may be provided to a device to train context aware correction model 450.

The mistranscribed terms generated are stored in local memory of the computing device. In some embodiments, the mistranscribed terms are not transmitted outside of the device (e.g., shared with a server, or another device). In some embodiments, the mistranscribed terms may be associated with an application program. In such embodiments, the mistranscribed terms may not be shared across application programs. For example, a first set of mistranscribed terms associated with a first application program are saved in a first memory associated with the first application program, and a second set of mistranscribed terms associated with a second application program are saved in a second memory associated with the second application program, and the first memory and second memory are partitioned or firewalled from one another.

Generally, data generation of mistranscribed terms and pairs of mistranscribed terms and non-common terms, and training of the machine learning model, can occur on the device of the user. This can have large compute benefits, especially in situations where many millions of users can be generating billions of terms at an hourly rate.

The generated mistranscribed terms expand the capabilities of an existing input recognition system. For example, context aware correction model 450 uses non-common terms from previous interactions of a user with the computing device, and the total number of mistranscribed terms that need to be considered for speech correction purposes are limited. This approach reduces both battery power and computational power, which is especially significant on resource constrained mobile devices.

In some embodiments, the generated mistranscribed terms can be applied to any upstream input recognition system. Such an approach ensures that modified input recognition can be carried out on server or on-device, according to the best resource available. For example, a hybrid approach can be applied where context aware correction model 450 is applied in a resource constrained environment (e.g., mobile device, low network bandwidth, and so forth), whereas a server based input recognition system using deep learning can be used when resources are less constrained (e.g., a desktop computing device, high network bandwidth, and so forth).

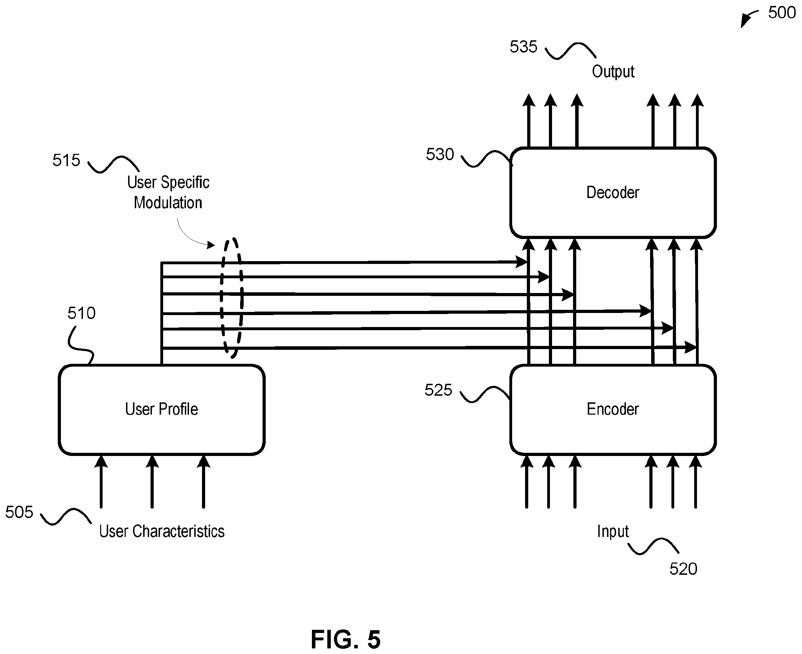

FIG. 5 an example neural network 500 for a context aware correction model for input recognition, in accordance with example embodiments. As indicated, user characteristics 505 can be used to determine user profile 510. In some embodiments, user characteristics 505 can include one or more languages associated with a user, dialects associated with a user, geographical or location information, and so forth. User specific modulation 515 can be applied to layers of the neural network. For example, user specific modulation 515 can include personalization persistence API rankers. Also, for example, a user can be prompted to speak a given sentence, and speech characteristics of the user can be inferred based on the spoken sentence. Such personalization enables adaptation of the input recognition system to the user based on user-specific attributes.

In some embodiments, a pre-trained model with accent modulation units can be deployed on user computing devices. A biasing, and/or fine-tuning process can be performed based on a user's information, such as contacts, locations, and so forth. Such user information is personalized, and the context aware correction model is configured to be trained on the device, and any generated data is also stored locally on the device. For example, the user may be viewing a grade transcript, a medical prescription, a diagnosis of an ailment, a financial document, or other forms of protected data, and context aware correction model can be configured to extract non-common terms from such user activity, and save them in a local memory of the device. Accordingly, although user information is utilized, the data does not leave the user's computing device. This allows for a private and personalized input recognition system for the users without having to use user history and other forms of user interactions that are not provided by the user. Minimizing usage of user history and/or logs can result in a significant improvement in use of computational resources. In some embodiments, personal information and/or other forms of protected data can be encrypted on the device to further protect it.

Neural network 500 can be a deep neural network with an encoder-decoder architecture, and several intermediate layers. In some embodiments, neural network 500 can utilize an on-device neural machine translation (NMT) model. For example, an FNet model, where a self-attention layer of an encoder is replaced with a Fourier layer that applies a two-dimensional (2D) Fourier transformation to an input, can be applied to language tasks. At run-time, input 520 can be a non-common term. Encoder 525 can encode input 520, which is then passed through one or more layers of neural network 500. User specific modulation can provide user attributes to the one or more layers. Decoder 530 can then determine mistranscribed terms that correspond to the non-common term that was provided as input 520. The mistranscribed terms are generated as output 535 of neural network 500. Although encoder 525 and decoder 530 are shown as single blocks, neural network 500 can include a plurality of encoders and decoders.

### Training Machine Learning Models for Generating Inferences/Predictions

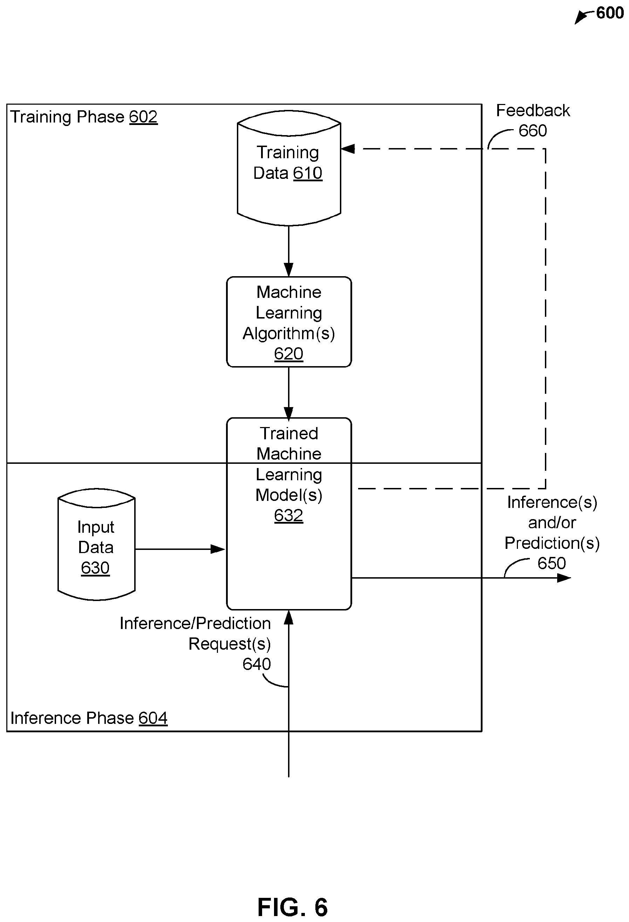

FIG. 6 shows diagram 600 illustrating a training phase 602 and an inference phase 604 of trained machine learning model(s) 632, in accordance with example embodiments. Some machine learning techniques involve training one or more machine learning algorithms on an input set of training data to recognize patterns in the training data and provide output inferences and/or predictions about (patterns in the) training data. The resulting trained machine learning algorithm can be termed as a trained machine learning model. For example, FIG. 6 shows training phase 602 where machine learning algorithm(s) 620 are being trained on training data 610 to become trained machine learning model(s) 632. Then, during inference phase 604, trained machine learning model(s) 632 can receive input data 630 and one or more inference/prediction requests 640 (perhaps as part of input data 630) and responsively provide as an output one or more inferences and/or prediction(s) 650.

As such, trained machine learning model(s) 632 can include one or more models of machine learning algorithm(s) 620. Machine learning algorithm(s) 620 may include, but are not limited to: an artificial neural network (*e.g.,* a herein-described convolutional neural networks, a recurrent neural network, a Bayesian network, a hidden Markov model, a Markov decision process, a logistic regression function, a support vector machine, a suitable statistical machine learning algorithm, and/or a heuristic machine learning system). Machine learning algorithm(s) 620 may be supervised or unsupervised, and may implement any suitable combination of online and offline learning.

In some examples, machine learning algorithm(s) 620 and/or trained machine learning model(s) 632 can be accelerated using on-device coprocessors, such as graphic processing units (GPUs), tensor processing units (TPUs), digital signal processors (DSPs), and/or application specific integrated circuits (ASICs). Such on-device coprocessors can be used to speed up machine learning algorithm(s) 620 and/or trained machine learning model(s) 632. In some examples, trained machine learning model(s) 632 can be trained, reside and execute to provide inferences on a particular computing device, and/or otherwise can make inferences for the particular computing device.

During training phase 602, machine learning algorithm(s) 620 can be trained by providing at least training data 610 as training input using unsupervised, supervised, semi-supervised, and/or reinforcement learning techniques. Unsupervised learning involves providing a portion (or all) of training data 610 to machine learning algorithm(s) 620 and machine learning algorithm(s) 620 determining one or more output inferences based on the provided portion (or all) of training data 610. Supervised learning involves providing a portion of training data 610 to machine learning algorithm(s) 620, with machine learning algorithm(s) 620 determining one or more output inferences based on the provided portion of training data 610, and the output inference(s) are either accepted or corrected based on correct results associated with training data 610. In some examples, supervised learning of machine learning algorithm(s) 620 can be governed by a set of rules and/or a set of labels for the training input, and the set of rules and/or set of labels may be used to correct inferences of machine learning algorithm(s) 620.

Semi-supervised learning involves having correct results for part, but not all, of training data 610. During semi-supervised learning, supervised learning is used for a portion of training data 610 having correct results, and unsupervised learning is used for a portion of training data 610 not having correct results. Reinforcement learning involves machine learning algorithm(s) 620 receiving a reward signal regarding a prior inference, where the reward signal can be a numerical value. During reinforcement learning, machine learning algorithm(s) 620 can output an inference and receive a reward signal in response, where machine learning algorithm(s) 620 are configured to try to maximize the numerical value of the reward signal. In some examples, reinforcement learning also utilizes a value function that provides a numerical value representing an expected total of the numerical values provided by the reward signal over time. In some examples, machine learning algorithm(s) 620 and/or trained machine learning model(s) 632 can be trained using other machine learning techniques, including but not limited to, incremental learning and curriculum learning.

In some examples, machine learning algorithm(s) 620 and/or trained machine learning model(s) 632 can use transfer learning techniques. For example, transfer learning techniques can involve trained machine learning model(s) 632 being pre-trained on one set of data and additionally trained using training data 610. More particularly, machine learning algorithm(s) 620 can be pre-trained on data from one or more computing devices and a resulting trained machine learning model provided to a particular computing device, where the particular computing device is intended to execute the trained machine learning model during inference phase 604. Then, during training phase 602, the pre-trained machine learning model can be additionally trained using training data 610, where training data 610 can be derived from kernel and non-kernel data of the particular computing device. This further training of the machine learning algorithm(s) 620 and/or the pre-trained machine learning model using training data 610 of the particular computing device's data can be performed using either supervised or unsupervised learning. Once machine learning algorithm(s) 620 and/or the pre-trained machine learning model has been trained on at least training data 610, training phase 602 can be completed. The trained resulting machine learning model can be utilized as at least one of trained machine learning model(s) 632.

In particular, once training phase 602 has been completed, trained machine learning model(s) 632 can be provided to a computing device, if not already on the computing device. Inference phase 604 can begin after trained machine learning model(s) 632 are provided to the particular computing device.

During inference phase 604, trained machine learning model(s) 632 can receive input data 630 and generate and output one or more corresponding inferences and/or prediction(s) 650 about input data 630. As such, input data 630 can be used as an input to trained machine learning model(s) 632 for providing corresponding inference(s) and/or prediction(s) 650 to kernel components and non-kernel components. For example, trained machine learning model(s) 632 can generate inference(s) and/or prediction(s) 650 in response to one or more inference/prediction requests 640. In some examples, trained machine learning model(s) 632 can be executed by a portion of other software. For example, trained machine learning model(s) 632 can be executed by an inference or prediction daemon to be readily available to provide inferences and/or predictions upon request. Input data 630 can include data from the particular computing device executing trained machine learning model(s) 632 and/or input data from one or more computing devices other than the particular computing device.

Input data 630 can include a non-common term. Other types of input data are possible as well. Inference(s) and/or prediction(s) 650 can include one or more mistranscribed terms that represent phonetically similar alternatives of pronouncing the non-common term. In some embodiments, inference(s) and/or prediction(s) 650 can include pairs of non-common terms and mistranscribed terms, with an associated confidence level indicative of a phonetic similarity of the mistranscribed term and the non-common term. Inference(s) and/or prediction(s) 650 can include other output data produced by trained machine learning model(s) 632 operating on input data 630 (and training data 610). In some examples, trained machine learning model(s) 632 can use output inference(s) and/or prediction(s) 650 as input feedback 660. Trained machine learning model(s) 632 can also rely on past inferences as inputs for generating new inferences.

Convolutional neural network 500 can be an example of machine learning algorithm(s) 620. After training, the trained version of convolutional neural network 500, can be an example of trained machine learning model(s) 632. In this approach, an example of the one or more inference/prediction requests 640 can be a request to predict one or more mistranscribed terms corresponding to a non-common term, and a corresponding example of inferences and/or prediction(s) 650 can be the output one or more mistranscribed terms.

### Example Data Network

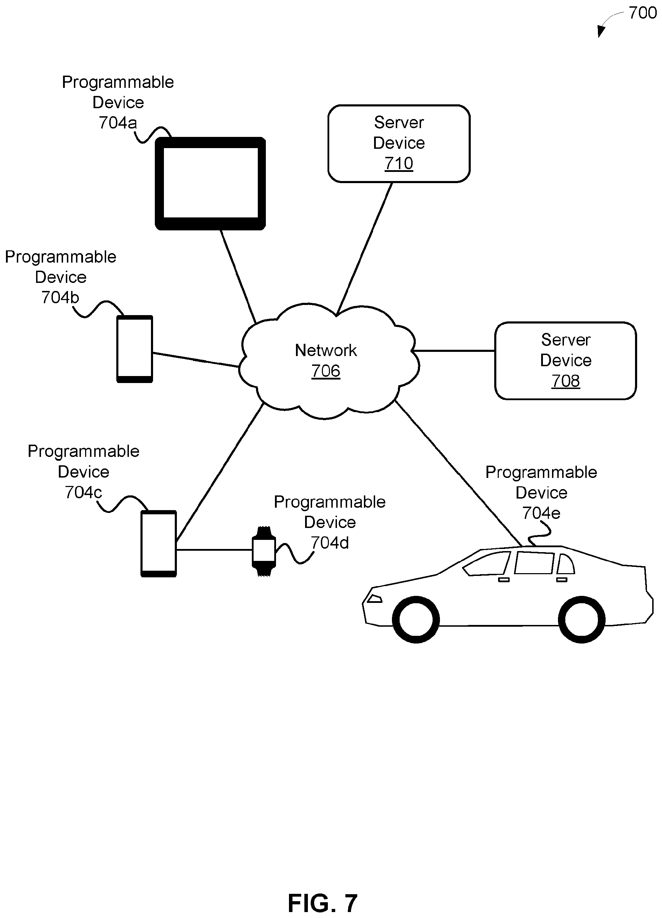

FIG. 7 depicts a distributed computing architecture 700, in accordance with example embodiments. Distributed computing architecture 700 includes server devices 708, 710 that are configured to communicate, via network 706, with programmable devices 704a, 704b, 704c, 704d, 704e. Network 706 may correspond to a local area network (LAN), a wide area network (WAN), a WLAN, a WWAN, a corporate intranet, the public Internet, or any other type of network configured to provide a communications path between networked computing devices. Network 706 may also correspond to a combination of one or more LANs, WANs, corporate intranets, and/or the public Internet.

Although FIG. 7 only shows five programmable devices, distributed application architectures may serve tens, hundreds, or thousands of programmable devices. Moreover, programmable devices 704a, 704b, 704c, 704d, 704e (or any additional programmable devices) may be any sort of computing device, such as a mobile computing device, desktop computer, wearable computing device, head-mountable device (HMD), network terminal, a mobile computing device, and so on. In some examples, such as illustrated by programmable devices 704a, 704b, 704c, 704e, programmable devices can be directly connected to network 706. In other examples, such as illustrated by programmable device 704d, programmable devices can be indirectly connected to network 706 via an associated computing device, such as programmable device 704c. In this example, programmable device 704c can act as an associated computing device to pass electronic communications between programmable device 704d and network 706. In other examples, such as illustrated by programmable device 704e, a computing device can be part of and/or inside a vehicle, such as a car, a truck, a bus, a boat or ship, an airplane, etc. In other examples not shown in FIG. 7, a programmable device can be both directly and indirectly connected to network 706.

Server devices 708, 710 can be configured to perform one or more services, as requested by programmable devices 704a-704e. For example, server device 708 and/or 710 can provide content to programmable devices 704a-704e. The content can include, but is not limited to, web pages, hypertext, scripts, binary data such as compiled software, images, audio, and/or video. The content can include compressed and/or uncompressed content. The content can be encrypted and/or unencrypted. Other types of content are possible as well.

As another example, server devices 708 and/or 710 can provide programmable devices 704a-704e with access to software for database, search, computation, graphical, audio, video, World Wide Web/Internet utilization, and/or other functions. Many other examples of server devices are possible as well.

### Computing Device Architecture

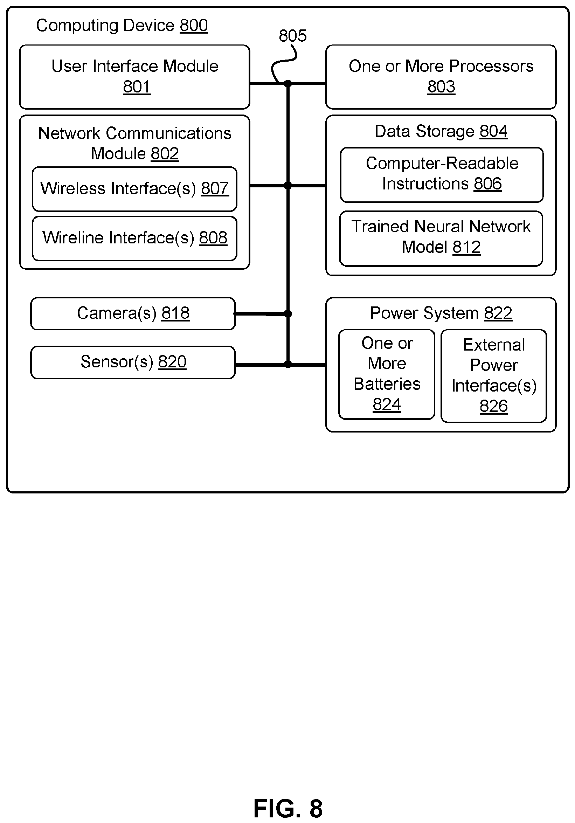

FIG. 8 is a block diagram of an example computing device 800, in accordance with example embodiments. In particular, computing device 800 shown in FIG. 8 can be configured to perform at least one function of and/or related to a context aware correction model as described herein, neural networks, method 900, and/or method 1000.

Computing device 800 may include a user interface module 801, a network communications module 802, one or more processors 803, data storage 804, one or more camera(s) 818, one or more sensors 820, and power system 822, all of which may be linked together via a system bus, network, or other connection mechanism 805.

User interface module 801 can be operable to send data to and/or receive data from external user input/output devices. For example, user interface module 801 can be configured to send and/or receive data to and/or from user input devices such as a touch screen, a computer mouse, a keyboard, a keypad, a touch pad, a trackball, a joystick, a voice recognition module, and/or other similar devices. User interface module 801 can also be configured to provide output to user display devices, such as one or more cathode ray tubes (CRT), liquid crystal displays, light emitting diodes (LEDs), displays using digital light processing (DLP) technology, printers, light bulbs, and/or other similar devices, either now known or later developed. User interface module 801 can also be configured to generate audible outputs, with devices such as a speaker, speaker jack, audio output port, audio output device, earphones, and/or other similar devices. User interface module 801 can further be configured with one or more haptic devices that can generate haptic outputs, such as vibrations and/or other outputs detectable by touch and/or physical contact with computing device 800. In some examples, user interface module 801 can be used to provide a graphical user interface (GUI) for utilizing computing device 800.

Network communications module 802 can include one or more devices that provide wireless interface(s) 807 and/or wireline interface(s) 808 that are configurable to communicate via a network. Wireless interface(s) 807 can include one or more wireless transmitters, receivers, and/or transceivers, such as a Bluetooth^{™} transceiver, a Zigbee^{®} transceiver, a Wi-Fi^{™} transceiver, a WiMAX^{™} transceiver, an LTE^{™} transceiver, and/or other type of wireless transceiver configurable to communicate via a wireless network. Wireline interface(s) 808 can include one or more wireline transmitters, receivers, and/or transceivers, such as an Ethernet transceiver, a Universal Serial Bus (USB) transceiver, or similar transceiver configurable to communicate via a twisted pair wire, a coaxial cable, a fiber-optic link, or a similar physical connection to a wireline network.

In some examples, network communications module 802 can be configured to provide reliable, secured, and/or authenticated communications. For each communication described herein, information for facilitating reliable communications (e.g., guaranteed message delivery) can be provided, perhaps as part of a message header and/or footer (*e.g.,* packet/message sequencing information, encapsulation headers and/or footers, size/time information, and transmission verification information such as cyclic redundancy check (CRC) and/or parity check values). Communications can be made secure (*e.g.,* be encoded or encrypted) and/or decrypted/decoded using one or more cryptographic protocols and/or algorithms, such as, but not limited to, Data Encryption Standard (DES), Advanced Encryption Standard (AES), a Rivest-Shamir-Adelman (RSA) algorithm, a Diffie-Hellman algorithm, a secure sockets protocol such as Secure Sockets Layer (SSL) or Transport Layer Security (TLS), and/or Digital Signature Algorithm (DSA). Other cryptographic protocols and/or algorithms can be used as well or in addition to those listed herein to secure (and then decrypt/decode) communications.

One or more processors 803 can include one or more general purpose processors, and/or one or more special purpose processors (*e.g.,* digital signal processors, tensor processing units (TPUs), graphics processing units (GPUs), application specific integrated circuits, etc.). One or more processors 803 can be configured to execute computer-readable instructions 806 that are contained in data storage 804 and/or other instructions as described herein.

Data storage 804 can include one or more non-transitory computer-readable storage media that can be read and/or accessed by at least one of one or more processors 803. The one or more computer-readable storage media can include volatile and/or non-volatile storage components, such as optical, magnetic, organic or other memory or disc storage, which can be integrated in whole or in part with at least one of one or more processors 803. In some examples, data storage 804 can be implemented using a single physical device (*e.g.,* one optical, magnetic, organic or other memory or disc storage unit), while in other examples, data storage 804 can be implemented using two or more physical devices.

Data storage 804 can include computer-readable instructions 806 and perhaps additional data. In some examples, data storage 804 can include storage required to perform at least part of the herein-described methods, scenarios, and techniques and/or at least part of the functionality of the herein-described devices and networks. In some examples, data storage 804 can include storage for a trained neural network model 812 (*e.g.,* a model of trained convolutional neural networks such as convolutional neural networks 140). In particular of these examples, computer-readable instructions 806 can include instructions that, when executed by the one or more processors 803, enable computing device 800 to provide for some or all of the functionality of trained neural network model 812.

In some examples, computing device 800 can include camera(s) 818. Camera(s) 818 can include one or more image capture devices, such as still and/or video cameras, equipped to capture light and record the captured light in one or more images; that is, camera(s) 818 can generate image(s) of captured light. The one or more images can be one or more still images and/or one or more images utilized in video imagery. Camera(s) 818 can capture light and/or electromagnetic radiation emitted as visible light, infrared radiation, ultraviolet light, and/or as one or more other frequencies of light.

In some examples, computing device 800 can include one or more sensors 820. Sensors 820 can be configured to measure conditions within computing device 800 and/or conditions in an environment of computing device 800 and provide data about these conditions. For example, sensors 820 can include one or more of: (i) sensors for obtaining data about computing device 800, such as, but not limited to, a thermometer for measuring a temperature of computing device 800, a battery sensor for measuring power of one or more batteries of power system 822, and/or other sensors measuring conditions of computing device 800; (ii) an identification sensor to identify other objects and/or devices, such as, but not limited to, a Radio Frequency Identification (RFID) reader, proximity sensor, one-dimensional barcode reader, two-dimensional barcode (e.g., Quick Response (QR) code) reader, and a laser tracker, where the identification sensors can be configured to read identifiers, such as RFID tags, barcodes, QR codes, and/or other devices and/or object configured to be read and provide at least identifying information; (iii) sensors to measure locations and/or movements of computing device 800, such as, but not limited to, a tilt sensor, a gyroscope, an accelerometer, a Doppler sensor, a GPS device, a sonar sensor, a radar device, a laser-displacement sensor, and a compass; (iv) an environmental sensor to obtain data indicative of an environment of computing device 800, such as, but not limited to, an infrared sensor, an optical sensor, a light sensor, a biosensor, a capacitive sensor, a touch sensor, a temperature sensor, a wireless sensor, a radio sensor, a movement sensor, a microphone, a sound sensor, an ultrasound sensor and/or a smoke sensor; and/or (v) a force sensor to measure one or more forces (*e.g.,* inertial forces and/or G-forces) acting about computing device 800, such as, but not limited to one or more sensors that measure: forces in one or more dimensions, torque, ground force, friction, and/or a zero moment point (ZMP) sensor that identifies ZMPs and/or locations of the ZMPs. Many other examples of sensors 820 are possible as well.

Power system 822 can include one or more batteries 824 and/or one or more external power interfaces 826 for providing electrical power to computing device 800. Each battery of the one or more batteries 824 can, when electrically coupled to the computing device 800, act as a source of stored electrical power for computing device 800. One or more batteries 824 of power system 822 can be configured to be portable. Some or all of one or more batteries 824 can be readily removable from computing device 800. In other examples, some or all of one or more batteries 824 can be internal to computing device 800, and so may not be readily removable from computing device 800. Some or all of one or more batteries 824 can be rechargeable. For example, a rechargeable battery can be recharged via a wired connection between the battery and another power supply, such as by one or more power supplies that are external to computing device 800 and connected to computing device 800 via the one or more external power interfaces. In other examples, some or all of one or more batteries 824 can be non-rechargeable batteries.

One or more external power interfaces 826 of power system 822 can include one or more wired-power interfaces, such as a USB cable and/or a power cord, that enable wired electrical power connections to one or more power supplies that are external to computing device 800. One or more external power interfaces 826 can include one or more wireless power interfaces, such as a Qi wireless charger, that enable wireless electrical power connections, such as via a Qi wireless charger, to one or more external power supplies. Once an electrical power connection is established to an external power source using one or more external power interfaces 826, computing device 800 can draw electrical power from the external power source the established electrical power connection. In some examples, power system 822 can include related sensors, such as battery sensors associated with one or more batteries or other types of electrical power sensors.

### Example Methods of Operation

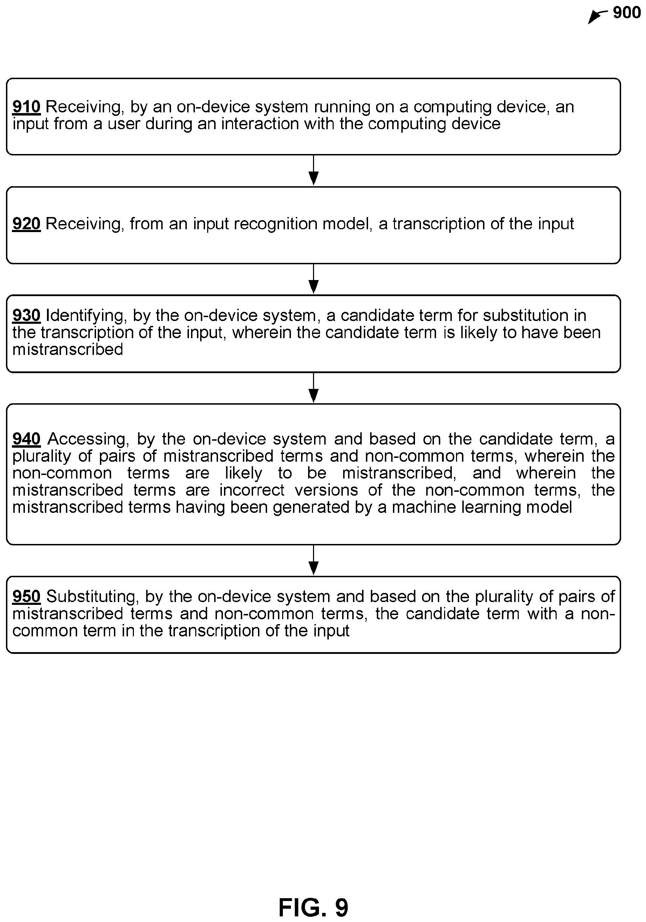

FIG. 9 is a flowchart of a method 900, in accordance with example embodiments. Method 900 can be executed by a computing device, such as computing device 800. Method 900 can begin at block 910, where the method involves receiving, by an on-device system running on a computing device, an input from a user during an interaction with the computing device.

At block 920, the method further involves receiving, from an input recognition model, a transcription of the input.

At block 930, the method also involves identifying, by the on-device system, a candidate term for substitution in the transcription of the input. The candidate term is likely to have been mistranscribed.

At block 940, the method additionally involves accessing, by the on-device system and based on the candidate term, a plurality of pairs of mistranscribed terms and non-common terms, wherein the non-common terms are likely to be mistranscribed, and wherein the mistranscribed terms are incorrect versions of the non-common terms, the mistranscribed terms having been generated by a machine learning model.

At block 950, the method further involves substituting, by the on-device system and based on the plurality of pairs of mistranscribed terms and non-common terms, the candidate term with a non-common term in the transcription of the input.

In some embodiments, the substituting of the candidate term involves comparing, by the on-device system, the candidate term with one or more mistranscribed terms from the plurality of pairs. Such embodiments also involve determining, based on whether the candidate term matches a mistranscribed term of the one or more mistranscribed terms, whether to substitute the candidate term with a corresponding non-common term that is paired with the matched mistranscribed term.

In some embodiments, the method involves identifying, by the on-device system, an additional term to replace in the transcription of the input. Such embodiments also involve determining that the additional term does not match the one or more mistranscribed terms. Such embodiments further involve maintaining the additional term in the transcription of the input.

In some embodiments, the substituting of the candidate term involves determining that the candidate term matches a particular mistranscribed term of a particular pair of the plurality of pairs, wherein the particular pair is associated with a particular confidence level indicative of a similarity of the particular mistranscribed term to a particular non-common term that is paired with the particular mistranscribed term. The confidence level may be determined as a numerical value (e.g., between 0 and 1, on a scale of 1 to 10, as a percentage value, and so forth). In some embodiments, the confidence level may be determined as a quality assessment such as, "high," "medium," or "low." Additional intermediate values may be determined as "medium-high," "medium-low," "very high," "very low," and so forth.

Some embodiments also involve determining whether the particular confidence exceeds a threshold. Generally, the threshold can vary from one user to another, from one application program to another, and so forth. Also, for example, the threshold can vary based on a user's geographical location, and/or language used. For example, the user may be in a country or region that speaks a particular language or dialect, and the user may modulate speech to adjust to local customs.

In some embodiments, the substituting of the candidate term further involves determining that the particular confidence level exceeds the threshold. Such embodiments also involve substituting the candidate term with the particular non-common term.

Some embodiments involve storing the plurality of pairs in a local repository of the computing device. Such embodiments also involve restricting access to contents of the local repository to within the computing device.

Some embodiments involve training a machine learning model to generate the mistranscribed terms for the non-common terms in the plurality of pairs.

In some embodiments, the training of the machine learning model further involves training the machine learning model to determine a respective confidence level for each pair of the plurality of pairs, wherein a given confidence level for a given pair comprising a given mistranscribed term and a given non-common term is indicative of a similarity of the given mistranscribed term to the given non-common term.

In some embodiments, the training of the machine learning model further involves receiving a corpus of web documents. Such embodiments also involve synthetically simulating one or more errors based on the corpus of web documents. In some embodiments, the synthetically simulating of the one or more errors is based on a text-to-speech model that utilizes a noisy channel simulator. In some embodiments, the synthetically simulating of the one or more errors is based on a grapheme to phoneme conversion model configured to generate a pronunciation for a word based on a textual version of the word. In some embodiments, the synthetically simulating of the one or more errors is based on a statistical phoneme model.

Some embodiments involve tuning the trained machine learning model based on an application program of the computing device. In some embodiments, the tuning of the trained machine learning model involves generating the mistranscribed terms in the plurality of pairs based on one or more errors associated with the application program.

Some embodiments involve receiving, by the computing device, a second input from the user during a second interaction with the computing device, wherein a second transcription of the second input comprises the candidate term. Such embodiments involve comparing the candidate term with one or more second mistranscribed terms, wherein the one or more second mistranscribed terms is different from the one or more mistranscribed terms. Such embodiments also involve substituting, by the on-device system and based on the comparison, the candidate term with a second non-common term in the transcription of the input, wherein the second non-common term is paired with a second mistranscribed term of the one or more second mistranscribed terms.

Some embodiments involve synthetically simulating the non-common terms in the plurality of pairs. For example, the non-common terms may be generated based on aggregated statistics of generally recognizable or known non-common terms. Also, for example, the non-common terms may be generated based on aggregated statistics of commonly mistranscribed terms (e.g., based on speech-to-text transcription, auto correction processes, and so forth). In some embodiments, the synthetically simulating of the non-common terms may be based on a trained machine learning model, for example, as the machine learning model described in the context of generating the mistranscribed terms.

In some embodiments, the non-common terms in the plurality of pairs were observed by the on-device system in one or more past interactions of the user with the computing device.

In some embodiments, the one or more past interactions of the user with the computing device involves an interaction with an application program of the computing device.

In some embodiments, the one or more past interactions of the user with the computing device involves a voice interaction. The non-common term in the plurality of pairs is based on a user confirmation of a transcribed term based on the voice interaction.

In some embodiments, the one or more past interactions of the user with the computing device involves an interaction with a text editor. The non-common term in the plurality of pairs is based on a user confirmation of a textual term in the text editor.

In some embodiments, the computing device includes a viewer interface. The one or more past interactions of the user with the computing device involves textual content provided by the viewer interface. The non-common term in the plurality of pairs appears in the textual content.

In some embodiments, the one or more past interactions of the user with the computing device may be one of a past interaction with a search application, a text messaging application, an electronic mail messaging application, an instant messaging application, a web browsing application, a media playback application, a telephone application, a video communications application, a gaming application, a mapping application, or a navigation application.

In some embodiments, the input from the user is a keyboard-based user input. In such embodiments, the input may be received as one or more of a typing operation, a swiping operation, or a gesturing operation. In some embodiments, the plurality of mistranscribed terms in the plurality of pairs of mistranscribed terms and non-common terms may be based on one or more contextual variations of the plurality of non-common terms.

In some embodiments, the input from the user is a voice-based user input.

In some embodiments, the input recognition model may be a cloud-based, automated input recognizer.

In some embodiments, the interaction with the computing device involves an interaction with an application program of the computing device.

In some embodiments, the interaction with the computing device may be one of an interaction with a search application, a text messaging application, an electronic mail messaging application, an instant messaging application, a web browsing application, a media playback application, a telephone application, a video communications application, a gaming application, a mapping application, or a navigation application.

In some embodiments, the interaction with the computing device may be an interaction with a digital assistant associated with the computing device.

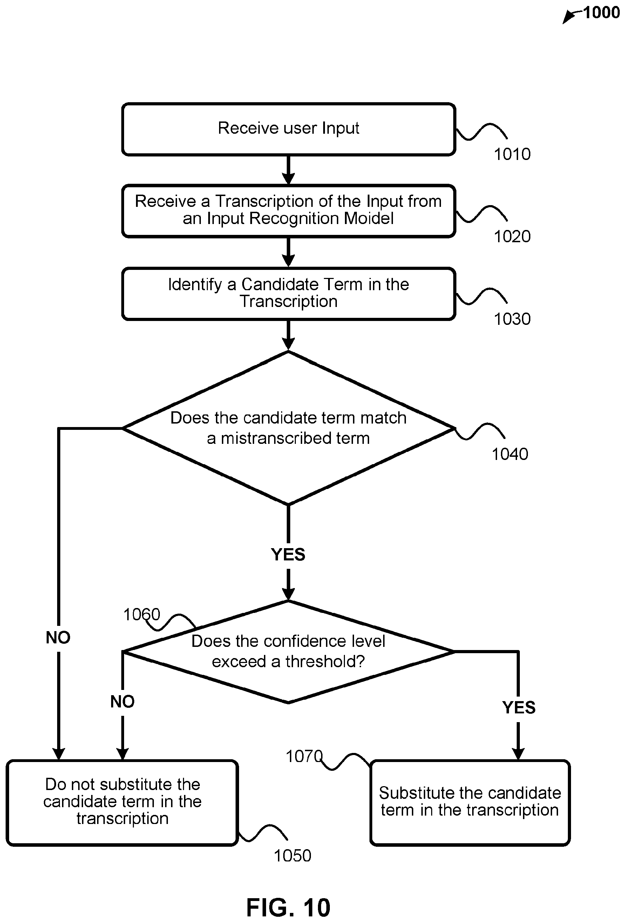

FIG. 10 is a flowchart of a method 1000, in accordance with example embodiments. Method 1000 can be executed by a computing device, such as computing device 800. Method 1000 can begin at block 1010, where the method involves receiving, by an on-device system running on a computing device, an input from a user during an interaction with the computing device.

At block 1020, the method further involves receiving, from an input recognition model, a transcription of the input.

At block 1030, the method also involves identifying a candidate term for substitution in the transcription of the input.

At block 1040, the method additionally involves determining whether the candidate term matches a mistranscribed term. For example, the method involves identifying, by the on-device system, a candidate term for substitution in the transcription of the input. The candidate term is likely to have been mistranscribed. The method further involves substituting, by the on-device system and based on the plurality of pairs of mistranscribed terms and non-common terms, the candidate term with a non-common term in the transcription of the input.

In some embodiments, the substituting of the candidate term involves comparing, by the on-device system, the candidate term with one or more mistranscribed terms from the plurality of pairs. Such embodiments also involve determining, based on whether the candidate term matches a mistranscribed term of the one or more mistranscribed terms, whether to substitute the candidate term with a corresponding non-common term that is paired with the matched mistranscribed term.

Upon a determination that the candidate term does not match a mistranscribed term, the method further involves, at block 1050, not substituting the candidate term in the transcription of the input.

Upon a determination that the candidate term matches a mistranscribed term, the method further involves, at block 1060, determining whether the confidence level for the pair comprising the matched mistranscribed term and the respective paired non-common term exceeds a threshold.

Upon a determination that the confidence level for the pair comprising the matched mistranscribed term and the respective paired non-common term does not exceed the threshold, the method further involves, at block 1050, not substituting the candidate term in the transcription of the input.

Upon a determination that the confidence level for the pair comprising the matched mistranscribed term and the respective paired non-common term exceeds the threshold, the method further involves, at block 1070, substituting the candidate term in the transcription of the input with the respective paired non-common term.

The present disclosure is not to be limited in terms of the particular embodiments described in this application, which are intended as illustrations of various aspects. Many modifications and variations can be made without departing from the scope of the claims, as will be apparent to those skilled in the art. Functionally equivalent methods and apparatuses will be apparent to those skilled in the art from the foregoing descriptions..

The above detailed description describes various features and functions of the disclosed systems, devices, and methods with reference to the accompanying figures. In the figures, similar symbols typically identify similar components, unless context dictates otherwise. The illustrative embodiments described in the detailed description, figures, and claims are not meant to be limiting. Other embodiments can be utilized, and other changes can be made, without departing from the scope of the claims. It will be readily understood that the aspects of the present disclosure, as generally described herein, and illustrated in the figures, can be arranged, substituted, combined, separated, and designed in a wide variety of different configurations.

With respect to any or all of the ladder diagrams, scenarios, and flow charts in the figures and as discussed herein, each block and/or communication may represent a processing of information and/or a transmission of information in accordance with example embodiments. Alternative embodiments are included within the scope of these example embodiments. In these alternative embodiments, for example, functions described as blocks, transmissions, communications, requests, responses, and/or messages may be executed out of order from that shown or discussed, including substantially concurrent or in reverse order, depending on the functionality involved. Further, more or fewer blocks and/or functions may be used with any of the ladder diagrams, scenarios, and flow charts discussed herein, and these ladder diagrams, scenarios, and flow charts may be combined with one another, in part or in whole.

A block that represents a processing of information may correspond to circuitry that can be configured to perform the specific logical functions of a herein-described method or technique. Alternatively or additionally, a block that represents a processing of information may correspond to a module, a segment, or a portion of program code (including related data). The program code may include one or more instructions executable by a processor for implementing specific logical functions or actions in the method or technique. The program code and/or related data may be stored on any type of computer readable medium such as a storage device including a disk or hard drive or other storage medium.

The computer readable medium may also include non-transitory computer readable media such as non-transitory computer-readable media that stores data for short periods of time like register memory, processor cache, and random access memory (RAM). The computer readable media may also include non-transitory computer readable media that stores program code and/or data for longer periods of time, such as secondary or persistent long term storage, like read only memory (ROM), optical or magnetic disks, compact-disc read only memory (CD-ROM), for example. The computer readable media may also be any other volatile or non-volatile storage systems. A computer readable medium may be considered a computer readable storage medium, for example, or a tangible storage device.

Moreover, a block that represents one or more information transmissions may correspond to information transmissions between software and/or hardware modules in the same physical device. However, other information transmissions may be between software modules and/or hardware modules in different physical devices.

With respect to embodiments that include determining a non-common term based on user interaction with a computing device, and/or determining mistranscribed terms using a machine learning model, or interactions by the computing device with cloud-based servers, a user may be provided with controls allowing the user to make an election as to both if and when systems, programs, or features described herein may enable collection of user information (e.g., information about a user's social network, social actions, or activities, profession, a user's preferences, a user's demographic information, a user's current location, or other personal information), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

While various aspects and embodiments have been disclosed herein, other aspects and embodiments will be apparent to those skilled in the art. The various aspects and embodiments disclosed herein are provided for explanatory purposes and are not intended to be limiting, with the true scope being indicated by the following claims.

## Claims

1. A computer-implemented method, comprising:
receiving (910), by an on-device system running on a computing device, an input from a user during an interaction with the computing device;
receiving (920), from an input recognition model, a transcription of the input;
identifying (930), by the on-device system, a candidate term for substitution in the transcription of the input, wherein the candidate term is likely to have been mistranscribed;
accessing (940), by the on-device system and based on the candidate term, a plurality of pairs of mistranscribed terms and non-common terms, wherein the non-common terms are likely to be mistranscribed, and wherein the mistranscribed terms are incorrect versions of the non-common terms; and
substituting (950), by the on-device system and based on the plurality of pairs of mistranscribed terms and non-common terms, the candidate term with a non-common term in the transcription of the input.

2. The computer-implemented method of claim 1, wherein the substituting of the candidate term further comprises:
comparing, by the on-device system, the candidate term with one or more mistranscribed terms from the plurality of pairs; and
determining, based on whether the candidate term matches a mistranscribed term of the one or more mistranscribed terms, whether to substitute the candidate term with a non-common term that is paired with the matched mistranscribed term.

3. The computer-implemented method of claim 2, further comprising:
identifying, by the on-device system, an additional term to replace in the transcription of the input;
determining that the additional term does not match the one or more mistranscribed terms; and
maintaining the additional term in the transcription of the input.

4. The computer-implemented method of claim 2, wherein the substituting of the candidate term further comprises:
determining that the candidate term matches a particular mistranscribed term of a particular pair of the plurality of pairs, wherein the particular pair is associated with a particular confidence level indicative of a similarity of the particular mistranscribed term to a particular non-common term that is paired with the particular mistranscribed term; and
determining whether the particular confidence level exceeds a threshold, and optionally wherein the substituting of the candidate term further comprises:
determining that the particular confidence level exceeds the threshold; and
substituting the candidate term with the particular non-common term.

5. The computer-implemented method of claim 1, further comprising:
storing the plurality of pairs in a local repository of the computing device, and optionally further comprising:
restricting access to contents of the local repository to within the computing device.

6. The computer-implemented method of claim 1,further comprising:
training a machine learning model to generate the mistranscribed terms for the non-common terms in the plurality of pairs.

7. The computer-implemented method of claim 6, wherein the training of the machine learning model further comprises:
training the machine learning model to determine a respective confidence level for each pair of the plurality of pairs, wherein a given confidence level for a given pair comprising a given mistranscribed term and a given non-common term is indicative of a similarity of the given mistranscribed term to the given non-common term.

8. The computer-implemented method of claim 6, wherein the training of the machine learning model further comprises:
receiving a corpus of documents; and
synthetically simulating one or more errors based on the corpus of documents.

9. The computer-implemented method of claim 8:
wherein the synthetically simulating of the one or more errors is based on a text-to-speech model that utilizes a noisy channel simulator, or
wherein the synthetically simulating of the one or more errors is based on a grapheme to phoneme conversion model configured to generate a pronunciation for a word based on a textual version of the word, or
wherein the synthetically simulating of the one or more errors is based on a statistical phoneme model.

10. The computer-implemented method of claim 6, further comprising:
tuning the trained machine learning model based on an application program of the computing device, and optionally wherein the tuning of the trained machine learning model comprises generating the mistranscribed terms in the plurality of pairs based on one or more errors associated with the application program.

11. The computer-implemented method of claim 1,
further comprising:
receiving, by the computing device, a second input from the user during a second interaction with the computing device, wherein a second transcription of the second input comprises the candidate term;
comparing the candidate term with one or more second mistranscribed terms, wherein the one or more second mistranscribed terms is different from the one or more mistranscribed terms; and
substituting, by the on-device system and based on the comparing of the candidate term with one or more second mistranscribed terms, the candidate term with a second non-common term in the transcription of the input, wherein the second non-common term is paired with a second mistranscribed term of the one or more second mistranscribed terms, or
further comprising synthetically simulating the non-common terms in the plurality of pairs.

12. The computer-implemented method of claim 1, wherein the non-common terms in the plurality of pairs were observed by the on-device system in one or more past interactions of the user with the computing device.

13. The computer-implemented method of claim 12, wherein:
the one or more past interactions of the user with the computing device comprises an interaction with an application program of the computing device, or
wherein the one or more past interactions of the user with the computing device comprises a voice interaction, and wherein the non-common term in the plurality of pairs is based on a user confirmation of a transcribed term based on the voice interaction, or
wherein the one or more past interactions of the user with the computing device comprises an interaction with a text editor, and wherein the non-common term in the plurality of pairs is based on a user confirmation of a textual term in the text editor, or
wherein the computing device comprises a viewer interface, and wherein the one or more past interactions of the user with the computing device comprises textual content provided by the viewer interface, and wherein the non-common term in the plurality of pairs appears in the textual content.

14. A computing device, comprising:
one or more processors (803); and
data storage (804), wherein the data storage has stored thereon computer-executable instructions that, when executed by the one or more processors, cause the computing device to perform the method of any preceding claim.

15. Computer-readable instructions that, when executed by one or more processors of a computing device, cause the computing device to perform the method of any of claims 1 to 13.

## Patentansprüche

1. Computerimplementiertes Verfahren, umfassend:
Empfangen (910) einer Eingabe von einem Benutzer während einer Interaktion mit einer Rechenvorrichtung durch ein auf der Vorrichtung befindliches System, das auf der Rechenvorrichtung läuft;
Empfangen (920) einer Transkription der Eingabe von einem Eingabeerkennungsmodell;
Identifizieren (930) eines zu ersetzenden Kandidatenbegriffs in der Transkription der Eingabe durch das auf der Vorrichtung befindliche System, wobei der Kandidatenbegriff wahrscheinlich falsch transkribiert worden ist;
Zugreifen (940) auf eine Vielzahl von Paaren von falsch transkribierten Begriffen und nicht gebräuchlichen Begriffen durch das auf der Vorrichtung befindliche System und basierend auf dem Kandidatenbegriff, wobei die nicht gebräuchlichen Begriffe wahrscheinlich falsch transkribiert werden und wobei die falsch transkribierten Begriffe falsche Versionen der nicht gebräuchlichen Begriffe sind; und
Ersetzen (950) des Kandidatenbegriffs durch einen nicht gebräuchlichen Begriff in der Transkription der Eingabe durch das auf der Vorrichtung befindliche System und basierend auf der Vielzahl von Paaren von falsch transkribierten Begriffen und nicht gebräuchlichen Begriffen.

2. Computerimplementiertes Verfahren nach Anspruch 1, wobei das Ersetzen des Kandidatenbegriffs ferner Folgendes umfasst:
Vergleichen des Kandidatenbegriffs mit einem oder mehreren falsch transkribierten Begriffen aus der Vielzahl von Paaren durch das auf der Vorrichtung befindliche System; und
Bestimmen, basierend darauf, ob der Kandidatenbegriff mit einem falsch transkribierten Begriff des einen oder der mehreren falsch transkribierten Begriffe übereinstimmt, ob der Kandidatenbegriff durch einen nicht gebräuchlichen Begriff zu ersetzen ist, der mit dem übereinstimmenden falsch transkribierten Begriff gepaart ist.

3. Computerimplementiertes Verfahren nach Anspruch 2, ferner umfassend:
Identifizieren eines zusätzlichen Begriffs zum Ersetzen in der Transkription der Eingabe durch das auf der Vorrichtung befindliche System;
Bestimmen, dass der zusätzliche Begriff nicht mit dem einen oder den mehreren falsch transkribierten Begriffen übereinstimmt; und
Aufrechterhalten des zusätzlichen Begriffs in der Transkription der Eingabe.

4. Computerimplementiertes Verfahren nach Anspruch 2, wobei das Ersetzen des Kandidatenbegriffs ferner Folgendes umfasst:
Bestimmen, dass der Kandidatenbegriff mit einem bestimmten falsch transkribierten Begriff eines bestimmten Paares der Vielzahl von Paaren übereinstimmt, wobei dem bestimmten Paar ein bestimmtes Konfidenzniveau zugeordnet ist, das auf eine Ähnlichkeit des bestimmten falsch transkribierten Begriffs mit einem bestimmten nicht gebräuchlichen Begriff hinweist, der mit dem bestimmten falsch transkribierten Begriff gepaart ist; und
Bestimmen, ob das jeweilige Konfidenzniveau einen Schwellenwert überschreitet, und optional wobei das Ersetzen des Kandidatenbegriffs ferner Folgendes umfasst:
Bestimmen, dass das bestimmte Konfidenzniveau den Schwellenwert überschreitet; und
Ersetzen des Kandidatenbegriffs durch den bestimmten nicht gebräuchlichen Begriff.

5. Computerimplementiertes Verfahren nach Anspruch 1, ferner umfassend,
Speichern der Vielzahl von Paaren in einem lokalen Verzeichnis der Rechenvorrichtung und optional ferner umfassend:
Beschränken des Zugriffs auf Inhalte des lokalen Verzeichnisses innerhalb der Rechenvorrichtung.

6. Computerimplementiertes Verfahren nach Anspruch 1, ferner umfassend:
Trainieren eines Maschinenlernmodells, um die falsch transkribierten Begriffe für die nicht gebräuchlichen Begriffe in der Vielzahl von Paaren zu erzeugen.

7. Computerimplementiertes Verfahren nach Anspruch 6, wobei das Trainieren des Maschinenlernmodells ferner Folgendes umfasst:
Trainieren des Maschinenlernmodells, um ein entsprechendes Konfidenzniveau für jedes Paar der Vielzahl von Paaren zu bestimmen, wobei ein gegebenes Konfidenzniveau für ein gegebenes Paar, das einen gegebenen falsch transkribierten Begriff und einen gegebenen nicht gebräuchlichen Begriff umfasst, auf eine Ähnlichkeit des gegebenen falsch transkribierten Begriffs mit dem gegebenen nicht gebräuchlichen Begriff hinweist.

8. Computerimplementiertes Verfahren nach Anspruch 6, wobei das Trainieren des Maschinenlernmodells ferner Folgendes umfasst:
Empfangen eines Korpus von Dokumenten; und
synthetisches Simulieren eines oder mehrerer Fehler basierend auf dem Korpus von Dokumenten.

9. Computerimplementiertes Verfahren nach Anspruch 8:
wobei das synthetische Simulieren des einen oder der mehreren Fehler auf einem Text-zu-Sprache-Modell basiert, das einen Rauschkanalsimulator einsetzt, oder
wobei das synthetische Simulieren des einen oder der mehreren Fehler auf einem Graphem-Phonem-Konvertierungsmodell basiert, das dazu konfiguriert ist, eine Aussprache für ein Wort basierend auf einer Textversion des Wortes zu erzeugen, oder
wobei das synthetische Simulieren des einen oder der mehreren Fehler auf einem statistischen Phonemmodell basiert.

10. Computerimplementiertes Verfahren nach Anspruch 6, ferner umfassend:
Abstimmen des trainierten Maschinenlernmodells basierend auf einem Anwendungsprogramm der Rechenvorrichtung und optional wobei das Abstimmen des trainierten Maschinenlernmodells ein Erzeugen der falsch transkribierten Begriffe in der Vielzahl von Paaren basierend auf einem oder mehreren Fehlern, die dem Anwendungsprogramm zugeordnet sind, umfasst.

11. Computerimplementiertes Verfahren nach Anspruch 1,
ferner umfassend:
Empfangen einer zweiten Eingabe von dem Benutzer während einer zweiten Interaktion mit der Rechenvorrichtung durch die Rechenvorrichtung, wobei eine zweite Transkription der zweiten Eingabe den Kandidatenbegriff umfasst;
Vergleichen des Kandidatenbegriffs mit einem oder mehreren zweiten falsch transkribierten Begriffen, wobei sich der eine oder die mehreren zweiten falsch transkribierten Begriffe von dem einen oder den mehreren falsch transkribierten Begriffen unterscheiden; und
Ersetzen des Kandidatenbegriffs durch einen zweiten nicht gebräuchlichen Begriff in der Transkription der Eingabe durch das auf der Vorrichtung befindliche System und basierend auf dem Vergleichen des Kandidatenbegriffs mit einem oder mehreren zweiten falsch transkribierten Begriffen, wobei der zweite nicht gebräuchliche Begriff mit einem zweiten falsch transkribierten Begriff des einen oder der mehreren zweiten falsch transkribierten Begriffe gepaart ist, oder
ferner umfassend das synthetische Simulieren der nicht gebräuchlichen Begriffe in der Vielzahl von Paaren.

12. Computerimplementiertes Verfahren nach Anspruch 1, wobei die nicht gebräuchlichen Begriffe in der Vielzahl von Paaren von dem auf der Vorrichtung befindlichen System in einer oder mehreren vergangenen Interaktionen des Benutzers mit der Rechenvorrichtung beobachtet wurden.

13. Computerimplementiertes Verfahren nach Anspruch 12, wobei:
die eine oder die mehreren vergangenen Interaktionen des Benutzers mit der Rechenvorrichtung eine Interaktion mit einem Anwendungsprogramm der Rechenvorrichtung umfassen, oder
wobei die eine oder die mehreren vergangenen Interaktionen des Benutzers mit der Rechenvorrichtung eine Sprachinteraktion umfassen, und wobei der nicht gebräuchliche Begriff in der Vielzahl von Paaren auf einer Benutzerbestätigung eines transkribierten Begriffs basierend auf der Sprachinteraktion basiert, oder
wobei die eine oder die mehreren vergangenen Interaktionen des Benutzers mit der Rechenvorrichtung eine Interaktion mit einem Texteditor umfassen und wobei der nicht gebräuchliche Begriff in der Vielzahl von Paaren auf einer Benutzerbestätigung eines Textbegriffs im Texteditor basiert, oder
wobei die Rechenvorrichtung eine Viewer-Schnittstelle umfasst und wobei die eine oder die mehreren vergangenen Interaktionen des Benutzers mit der Rechenvorrichtung Textinhalte umfassen, die von der Viewer-Schnittstelle bereitgestellt werden, und wobei der nicht gebräuchliche Begriff in der Vielzahl von Paaren in den Textinhalten erscheint.

14. Rechenvorrichtung, umfassend:
einen oder mehrere Prozessoren (803); und
Datenspeicher (804), wobei im Datenspeicher computerausführbare Anweisungen gespeichert sind, die bei Ausführung durch den einen oder die mehreren Prozessoren die Rechenvorrichtung veranlassen, das Verfahren nach einem der vorhergehenden Ansprüche durchzuführen.

15. Computerlesbare Anweisungen, die, wenn bei Ausführung durch einen oder mehrere Prozessoren einer Rechenvorrichtung, die Rechenvorrichtung veranlassen, das Verfahren nach einem der Ansprüche 1 bis 13 durchzuführen.

## Revendications

1. Procédé mis en œuvre par ordinateur, comprenant :
la réception (910), par un système embarqué fonctionnant sur un dispositif informatique, d'une entrée d'un utilisateur lors d'une interaction avec le dispositif informatique ;
la réception (920), à partir d'un modèle de reconnaissance d'entrée, d'une transcription de l'entrée ;
l'identification (930), par le système embarqué, d'un terme candidat à la substitution dans la transcription de l'entrée, dans lequel le terme candidat est susceptible d'avoir été mal transcrit ;
l'accès (940), par le système embarqué et sur la base du terme candidat, à une pluralité de paires de termes mal transcrits et de termes non communs, dans lequel les termes non communs sont susceptibles d'être mal transcrits, et dans lequel les termes mal transcrits sont des versions incorrectes des termes non communs ; et
la substitution (950), par le système embarqué et sur la base de la pluralité de paires de termes mal transcrits et de termes non communs, du terme candidat par un terme non commun dans la transcription de l'entrée.

2. Procédé mis en œuvre par ordinateur selon la revendication 1, dans lequel la substitution du terme candidat comprend également :
la comparaison, par le système embarqué, du terme candidat avec un ou plusieurs termes mal transcrits à partir de la pluralité de paires ; et
le fait de déterminer, sur la base de la correspondance ou non entre le terme candidat et un terme mal transcrit des un ou plusieurs termes mal transcrits, s'il convient de substituer le terme candidat par un terme non commun qui est apparié au terme mal transcrit correspondant.

3. Procédé mis en œuvre par ordinateur selon la revendication 2, comprenant également :
l'identification, par le système embarqué, d'un terme supplémentaire à remplacer dans la transcription de l'entrée ;
la détermination que le terme supplémentaire ne correspond pas aux un ou plusieurs termes mal transcrits ; et
la conservation du terme supplémentaire dans la transcription de l'entrée.

4. Procédé mis en œuvre par ordinateur selon la revendication 2, dans lequel la substitution du terme candidat comprend également :
la détermination que le terme candidat correspond à un terme mal transcrit particulier d'une paire particulière de la pluralité de paires, dans lequel la paire particulière est associée à un niveau de confiance particulier indicatif d'une similarité entre le terme mal transcrit particulier et un terme non commun particulier qui est apparié au terme mal transcrit particulier ; et
le fait de déterminer si le niveau de confiance particulier dépasse un seuil, et éventuellement dans lequel la substitution du terme candidat comprend également :
la détermination que le niveau de confiance particulier dépasse le seuil ; et
la substitution du terme candidat par le terme non commun particulier.

5. Procédé mis en œuvre par ordinateur selon la revendication 1, comprenant également :
le stockage de la pluralité de paires dans un référentiel local du dispositif informatique, et comprenant éventuellement également :
la limitation de l'accès au contenu du référentiel local à l'intérieur du dispositif informatique

6. Procédé mis en œuvre par ordinateur selon la revendication 1, comprenant également :
l'entraînement d'un modèle d'apprentissage machine pour générer les termes mal transcrits pour les termes non communs dans la pluralité de paires.

7. Procédé mis en œuvre par ordinateur selon la revendication 6, dans lequel le modèle d'apprentissage machine comprend également :
l'entraînement du modèle d'apprentissage machine pour déterminer un niveau de confiance respectif pour chaque paire de la pluralité de paires, dans lequel un niveau de confiance donné pour une paire donnée comprenant un terme mal transcrit donné et un terme non commun donné est indicatif d'une similarité entre le terme mal transcrit donné et le terme non commun donné.

8. Procédé mis en œuvre par ordinateur selon la revendication 6, dans lequel le modèle d'apprentissage machine comprend également :
la réception d'un corpus de documents ; et
la simulation synthétique d'une ou de plusieurs erreurs sur la base du corpus de documents.

9. Procédé mis en œuvre par ordinateur selon la revendication 8 :
dans lequel la simulation synthétique des une ou plusieurs erreurs est sur la base d'un modèle de synthèse vocale qui utilise un simulateur de canal bruité, ou
dans lequel la simulation synthétique des une ou plusieurs erreurs est sur la base d'un modèle de conversion graphème-phonème configuré pour générer une prononciation d'un mot sur la base d'une version textuelle du mot, ou
dans lequel la simulation synthétique des une ou plusieurs erreurs est sur la base d'un modèle phonémique statistique.

10. Procédé mis en œuvre par ordinateur selon la revendication 6, comprenant également :
le réglage du modèle d'apprentissage machine entraîné sur la base d'un programme d'application du dispositif informatique, et éventuellement dans lequel le réglage du modèle d'apprentissage machine entraîné comprend la génération des termes mal transcrits dans la pluralité de paires sur la base d'une ou de plusieurs erreurs associées au programme d'application.

11. Procédé mis en œuvre par ordinateur selon la revendication 1,
comprenant également :
la réception, par le dispositif informatique, d'une seconde entrée de l'utilisateur lors d'une seconde interaction avec le dispositif informatique, dans lequel une seconde transcription de la seconde entrée comprend le terme candidat ;
la comparaison du terme candidat avec un ou plusieurs seconds termes mal transcrits, dans lequel les un ou plusieurs seconds termes mal transcrits sont différents des un ou plusieurs termes mal transcrits ; et
la substitution, par le système embarqué et sur la base de la comparaison du terme candidat avec un ou plusieurs seconds termes mal transcrits, du terme candidat par un second terme non commun dans la transcription de l'entrée, dans lequel le second terme non commun est apparié à un second terme mal transcrit des un ou plusieurs seconds termes mal transcrits, ou
comprenant également la simulation synthétique des termes non communs dans la pluralité de paires.

12. Pocédé mis en œuvre par ordinateur selon la revendication 1, dans lequel les termes non communs dans la pluralité de paires ont été observés par le système embarqué dans une ou plusieurs interactions passées de l'utilisateur avec le dispositif informatique.

13. Procédé mis en œuvre par ordinateur selon la revendication 12, dans lequel :
les une ou plusieurs interactions passées de l'utilisateur avec le dispositif informatique comprennent une interaction avec un programme d'application du dispositif informatique, ou
dans lequel les une ou plusieurs interactions passées de l'utilisateur avec le dispositif informatique comprennent une interaction vocale, et dans lequel le terme non commun dans la pluralité de paires est sur la base d'une confirmation par l'utilisateur d'un terme transcrit sur la base de l'interaction vocale, ou
dans lequel les une ou plusieurs interactions passées de l'utilisateur avec le dispositif informatique comprennent une interaction avec un éditeur de texte, et dans lequel le terme non commun dans la pluralité de paires est sur la base d'une confirmation par l'utilisateur d'un terme textuel dans l'éditeur de texte, ou
dans lequel le dispositif informatique comprend une interface de visualisation, et dans lequel les une ou plusieurs interactions passées de l'utilisateur avec le dispositif informatique comprennent un contenu textuel fourni par l'interface de visualisation, et dans lequel le terme non commun dans la pluralité de paires apparaît dans le contenu textuel.

14. Dispositif informatique, comprenant :
un ou plusieurs processeurs (803) ; et
un stockage de données (804), dans lequel le stockage de données a des instructions exécutables par ordinateur stockées dans celui-ci qui, lorsqu'elles sont exécutées par les un ou plusieurs processeurs, amènent le dispositif informatique à réaliser le procédé selon une quelconque revendication précédente.

15. Instructions lisibles par ordinateur qui, lorsqu'elles sont exécutées par un ou plusieurs processeurs d'un dispositif informatique, amènent le dispositif informatique à réaliser le procédé selon l'une quelconque des revendications 1 à 13.
